# FASCICULE DE BREVET EUROPEEN

(11) **EP 2 271 053 B1**
(45) Date de publication et mention de la délivrance du brevet: **31.07.2019**
(21) Numéro de dépôt: 10162538.2
(22) Date de dépôt: 11.05.2010
(51) Int. Cl.: H04L 29/08, G06F 21/00, H04L 29/06

(54) **Système et procédé évolutif de gestion et d'agrégation de plusieurs identifiants autour d'un authentifiant polymorphe**
System und ausbaufähiges Verfahren zur Verwaltung und Zusammenfassung von mehreren Kennungen um einen polymorphen Authentifizierer
Evolving system and method for managing and aggregating several identifiers around a polymorphous authenticator

(30) Priorité: 03.07.2009 FR 0903284
(43) Date de publication de la demande: 05.01.2011
(73) Titulaire: SOCIETE FRANCAISE DU RADIO TELEPHONE (SFR), 75015 Paris (FR)
(72) Inventeur: Teimoorzadeh, Kourosh, 28130, Bouglainval (FR)
(74) Mandataire: Debay, Damien

(56) Documents cités:
- WO-A2-01/52023
- US-A1- 2005 033 968
- US-A1- 2005 177 731
- US-A1- 2005 257 245
- US-B1- 6 496 855

## Description

La présente invention se rapporte au domaine des systèmes de centralisation de plusieurs identifiants d'un même utilisateur et plus particulièrement au domaine des systèmes d'agrégation, de gestion et de modification de plusieurs identifiants centrés autour d'un authentifiant polymorphe.

A l'heure actuelle, un même utilisateur est en mesure de se connecter à plusieurs serveurs d'un réseau ou à différents services en utilisant des identifiants différents lors des étapes respectives d'authentification. Les identifiants utilisés varient alors suivant que l'authentification est réalisée dans un cadre professionnel ou privé, ou encore dans un cadre d'accès à un service ou à un réseau. Le type d'information qui se trouve associé à ces identifiants présente généralement des niveaux de confidentialité différents. De même, les mécanismes d'identification et d'authentification peuvent être amenés à varier d'un serveur à un autre et imposer la mise en place d'une relation de confiance privilégiée avec le terminal de l'utilisateur. Par ailleurs, la multiplication des mécanismes d'identification a mené à des incompatibilités de fonctionnement pour certains d'entre eux qui a conduit à la création de certaines confédérations de service où un ensemble de plusieurs services sont regroupés pour être proposés à partir d'une même identification. Un exemple de ce type de solution est le standard informatique SAML (Security Assertion Markup Language) qui a été développé pour proposer une authentification unique qui permet à un utilisateur d'opérer une navigation sur plusieurs sites différents en ne s'authentifiant qu'une seule fois, sans pour autant que la connexion à ces sites n'entraîne un accès à des informations trop confidentielles.

Toutefois, une telle solution demeure restrictive et ne permet pas d'harmoniser les modes de fonctionnement en s'affranchissant de cette multiplication des normes d'identification. La multiplication des normes des processus d'authentification reste donc un problème central dans la standardisation d'une authentification centralisée, d'autant que les différents sites auxquels un utilisateur se connecte par l'intermédiaire de différents identifiants peuvent être amenés à requérir des niveaux de confiance différents.

D'autre part, il est connu divers systèmes et procédés de gestion d'identifiants tels que ceux des documents US6496855, WO0152023, US2005177731, US2005033968 et US2005257245.

Il apparaît donc que les solutions actuelles qui permettent la gestion d'une pluralité d'identifiants se trouvent face à des contraintes de fonctionnement avec des marges de manoeuvre restreintes pour travailler avec un nombre important d'identifiants intervenant respectivement dans des processus d'authentification différents mais également avec des niveaux de confiance variables selon la finalité de la connexion au serveur par l'utilisateur.

La présente invention a pour objet de supprimer un ou plusieurs inconvénients de l'art antérieur en proposant notamment une solution qui permette non seulement une gestion des authentifications d'un utilisateur auprès de différentes interfaces réseau ou serveur, mais également permette d'opérer la gestion de ces authentifications en toute confiance.
- Cet objectif est atteint par l'objet de la revendication 1.

Un autre objectif de l'invention est de proposer un procédé adapté pour la mise en oeuvre des systèmes de l'invention.

Cet objectif est atteint par l'objet de la revendication 9.

L'invention, avec ses caractéristiques et avantages, ressortira plus clairement à la lecture de la description faite en référence aux dessins annexés dans lequel :

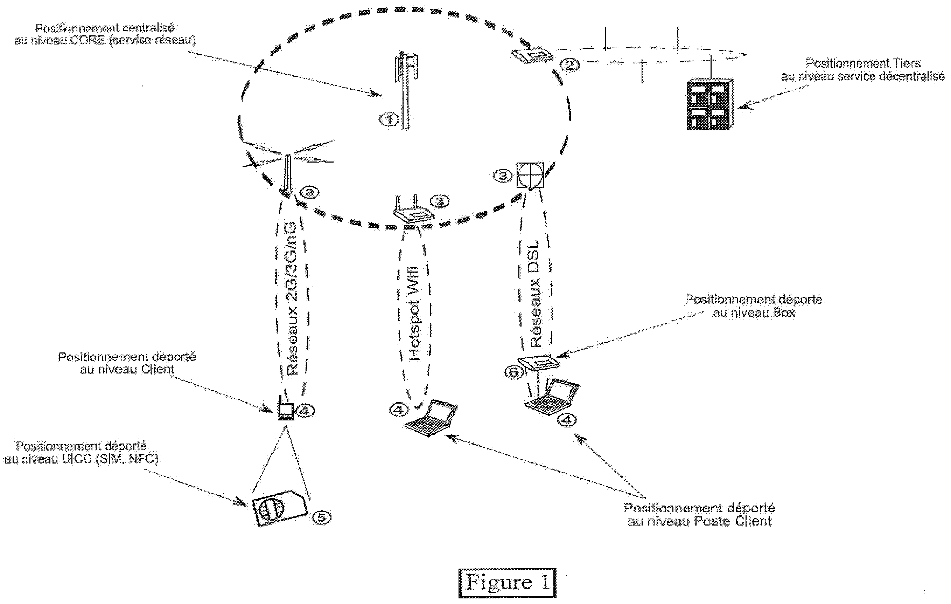

- la figure 1 représente un schéma d'organisation de différents éléments du système selon l'invention,

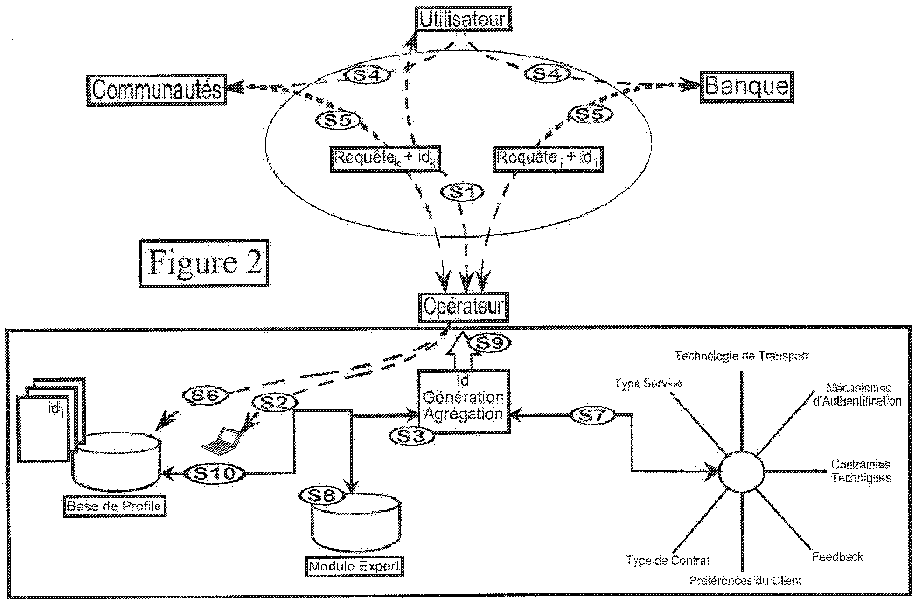

- la figure 2 représente un schéma simplifié des principaux échanges intervenant dans le fonctionnement du système selon l'invention,

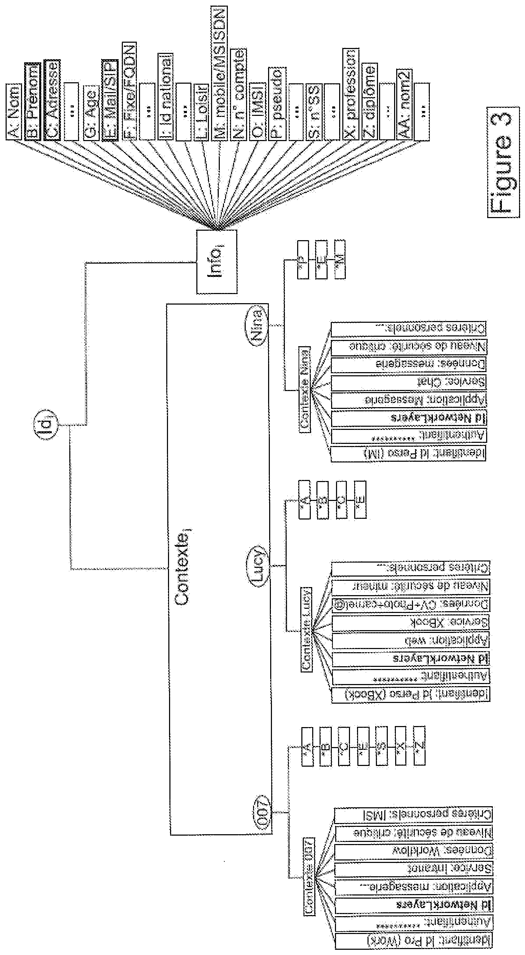

- la figure 3 représente un exemple d'organisation des identifiants dans une base de données du système selon l'invention,

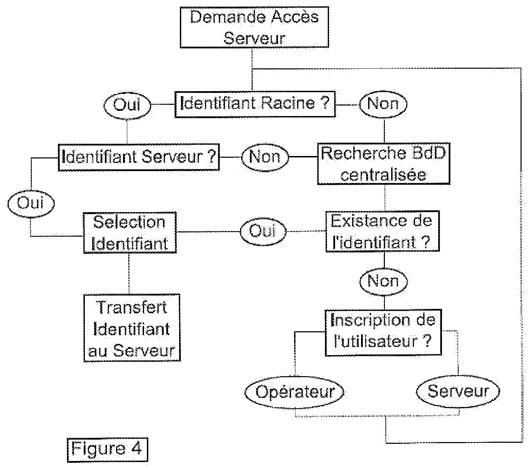

- la figure 4 représente un organigramme illustrant un exemple de procédé de fonctionnement d'un système de l'invention,
- la figure 5 représente un exemple de schéma illustrant des échanges lors de communications de confiance,
- la figure 6 représente un exemple de schéma de terminal client,
- la figure 7 représente un exemple d'interconnexion de terminaux et de serveurs,
- la figure 8 représente un exemple d'interconnexion de réseaux,
- la figure 9 représente un exemple de routage vers un serveur connecté à plusieurs réseaux,
- la figure 10 représente un exemple de serveur d'identifiants de confiance,
- les figures 11 et 12 représentent un exemple de procédé de communication,
- la figure 13 représente un exemple de transactions.

Les divulgations présentes dans la demande de brevet n° FR 08 00168 se rapportant à un « procédé et système de communication et terminal de confiance » font partie de l'arrière-plan technologique pour le présent document.

Il convient de faire remarquer que dans le présent document le système de l'invention, lorsqu'il est arrangé pour être géré par un opérateur de téléphonie mobile ou fournisseur d'accès à au moins une interface d'un réseau de communication, l'expression « équipement du centre de gestion » se rapporte à un élément de l'opérateur ou à un portail de l'opérateur. De même, il convient de noter que dans le présent document, le terme « serveur » fait référence à un portail de type par exemple ISP (*Internet Service Provider*) auquel un utilisateur souhaite s'identifier et/ou s'authentifier et peut également faire référence à un réseau présentant un portail avec des caractéristiques similaires.

La présente invention concerne un système de gestion et d'agrégation de plusieurs identifiants autour d'une racine d'identification commune spécifique d'un utilisateur, ces différents identifiants se rapportant respectivement à un portail d'authentification d'un serveur ou d'un réseau spécifique auquel un utilisateur s'est déjà enregistré ou souhaite se connecter.

Le système selon l'invention comprend ainsi un centre de gestion (1) qui forme le coeur du système et présente notamment une première interface de communication (3) avec au moins un utilisateur et une seconde interface de communication (2) avec un ou plusieurs serveurs et/ou réseau. Ces interfaces de communication peuvent être de tout type, comme par exemple et de façon non restrictive, GSM, UMTS, Internet, Wi-Fi, etc. Cependant, il importe que, pour que le système de l'invention soit en mesure de fonctionner, le centre de gestion soit positionné entre l'utilisateur du système et les différents portails auxquels l'utilisateur est enregistré ou souhaite se connecter. Le système de l'invention, par son centre de gestion, tient le rôle d'interlocuteur intermédiaire privilégié pour les portails d'un serveur ou réseau lors d'une authentification ou d'une identification d'un utilisateur au niveau de ces portails.

Ce centre de gestion est associé à au moins une base de données dans laquelle chaque utilisateur du système présente une correspondance avec au moins un identifiant de premier niveau, aussi appelé identifiant-racine. Chaque identifiant de premier niveau de la base de données forme un fichier-mère ou un tronc commun pour au moins un identifiant de niveau supérieur, aussi appelé identifiant-serveur. Chacun de ces identifiants de niveau supérieur forme un fichier qui regroupe une ou plusieurs données qui sont, au moins, nécessaires à l'authentification de l'utilisateur au niveau du portail d'au moins un serveur ou réseau.

Au sein de la base de données, chacun des identifiants de niveau supérieur intègre au moins un champ d'informations susceptibles d'être accessibles au serveur auquel correspond cet identifiant de niveau supérieur. Ces informations sont, par exemple et de façon non limitative, le nom, le prénom et l'adresse du titulaire de l'identifiant, son âge, son adresse mail (SIP), son nom de domaine (FQDN *Fully Qualified Domain Name*), un identifiant national, un numéro de téléphonie mobile (MSISDN *Mobile Subscriber Integrated Services Digital Network Number*), un numéro de compte, un numéro IMSI (*International Mobile Subscriber Identity Number*), un pseudonyme emprunté par l'utilisateur sur le serveur, un numéro de sécurité sociale, un numéro de compte bancaire, un ou plusieurs diplôme, une profession, etc. Il convient de faire remarquer que toutes ces données qui remplissent le champ d'information de l'identifiant de niveau supérieur ne sont pas forcément vérifiées et peuvent donc être fournie de façon arbitraire par l'utilisateur sans être fondées ou s'appuyer sur une réalité vérifiable. L'identifiant de niveau supérieur est également associé à un champ contexte qui comprend plusieurs données contextuelles, chacune se rapportant à un type d'information particulier. Selon un mode de réalisation préféré, le champ contexte intègre un ou plusieurs éléments d'une liste qui comprend notamment :
- un identifiant-profil associé à l'identifiant de niveau supérieur et qui forme l'identifiant sous lequel l'utilisateur est enregistré au niveau du portail du serveur,
- un authentifiant associé à l'identifiant-profil, par exemple un mot de passe,
- un élément d'identification d'au moins une des couches de traitement ou de transport du réseau (*Id_NetworkLayers*) emprunté lors d'une opération d'authentification qui met en jeu l'identifiant de niveau supérieur correspondant,
- un nom d'application, par exemple un compte de messagerie ou une page Web,
- un identifiant du type de service proposé par le serveur, par exemple un service intranet ou bien une interface de messagerie instantanée,
- au moins une donnée associée à l'identifiant-profil, par exemple un CV, un groupe de photos, un carnet d'adresses électroniques,
- un niveau de sécurité requis lors de l'authentification pour autoriser et/ou cloisonner l'accès à au moins une donnée de l'identifiant-profil, ce niveau de sécurité pouvant être défini, par exemple, par un indice de confiance,
- un critère propre à l'utilisateur, par exemple un numéro IMSI (*International Mobile Subscriber Identity*).

Selon un mode de réalisation particulier, l'identifiant de premier niveau est également associé d'une part à un champ contexte regroupant l'ensemble des identifiants de niveau supérieur associés et d'autre part à un champ d'informations correspondant et susceptibles d'être accessibles au serveur. Les données des champs d'information respectifs de chacun des différents identifiants de niveau supérieur associé à l'identifiant de premier niveau peuvent alors correspondre à une ou plusieurs des informations enregistrées dans le champ information de l'identifiant de premier niveau et ces informations peuvent être reportées dans le champ information de l'identifiant de niveau supérieur. Ce mode de réalisation particulier permet notamment un cloisonnement de l'accessibilité des informations d'un utilisateur par le portail d'un serveur. Le portail d'un serveur n'a ainsi accès qu'aux informations de l'utilisateur reportées dans le champ information de l'identifiant de niveau supérieur qui lui correspond. La divulgation de chacune des informations publiques ou privées est ainsi contrôlée pour chaque portail de serveur ou de réseau.

Selon le mode de réalisation de l'invention, la base de données peut être disposée au niveau d'une unité particulière intégrée au centre de gestion. Cette unité particulière peut alors être formée par un portail de l'opérateur du système ou par tout équipement du système adapté. Selon une variante de réalisation, la base de données est déportée au niveau d'un moyen de mémorisation d'un terminal (4) de l'utilisateur, ou bien encore au niveau d'une carte à circuits intégrés (*Universal Integrated Circuit Card*) (5) utilisée par le terminal, par exemple une carte mobile de type carte SIM. Selon un autre mode de réalisation, la base de données peut se positionner au niveau d'un équipement de terminaison réseau (6) d'un fournisseur d'accès réseau. Ces différents modes de réalisation ne sont pas limitatifs et peuvent être combinés entre eux, de sorte que, par exemple, une partie de la base de données relative à un certain nombre d'identifiants de niveau de base se trouve déportée au niveau d'un terminal spécifique de l'utilisateur titulaire d'au moins un des identifiants de niveau de base.

Le système de l'invention comprend également un dispositif de gestion de l'authentification d'un utilisateur titulaire d'un identifiant de niveau de premier niveau au niveau d'un portail. Ce dispositif de gestion est notamment associé à un dispositif de sélection d'au moins un identifiant de niveau supérieur pour effectuer une récupération de données qui permettront une authentification de l'utilisateur au niveau du portail. Le dispositif de gestion est également associé à au moins un moyen d'analyse contextuelle de l'authentification, cette analyse contextuelle permet une récupération spécifique de données qui permettent de définir le portail d'authentification et les informations liées à l'identifiant de niveau supérieur qui est corrélé à ce portail d'authentification. Les informations contextuelles récupérées facilitent ainsi la sélection d'une part de l'identifiant approprié de niveau supérieur et d'autre part des données nécessaires à l'authentification de l'utilisateur auprès du portail.

Il convient de noter que l'organisation des identifiants dans la base de données n'est pas opérée uniquement sur deux niveaux, mais, au contraire, peut présenter un nombre de niveaux beaucoup plus important. L'organisation des identifiants est alors agencée de sorte que chaque identifiant d'un même niveau comprend respectivement au moins un champ d'informations contextuelles dans lequel au moins un identifiant de niveau supérieur est enregistré ou bien est susceptible d'être enregistré. L'organisation des identifiants, proposée comme exemple et de façon non restrictive dans le présent document, comprend ainsi des identifiants-racine qui forment les identifiants de premier niveau (niveau 1), la base de l'organisation, dans le champ d'informations contextuelles de ces identifiants-racine sont enregistrés des identifiants de niveau supérieur (niveau 2) : les identifiants-serveur. Dans le champ d'informations contextuelles des identifiants-serveur se trouvent enregistrés des identifiants de niveau encore supérieur (niveau 3) : les identifiants-profil, etc. Une telle organisation présente ainsi un arrangement fractal des différents identifiants et autorise l'enregistrement d'une infinité d'identifiants, aussi bien à un même niveau que le long d'une même arborescence.

L'utilisateur demeure le titulaire de l'identifiant principal, en l'occurrence de l'identifiant de premier niveau, ou identifiant-racine dans l'exemple de réalisation proposé, qui intègre toutes les informations liées à son profil, autant à un niveau d'identification qu'à un niveau contextuel. Le système de l'invention est, lui, le gestionnaire des différents identifiants de l'invention. Il maintient et enrichit l'ensemble des informations des identifiants de l'utilisateur tout en garantissant un niveau de sécurité dans leur divulgation. Le serveur, en revanche, est le propriétaire d'un service proposé à l'utilisateur, il participe à l'enrichissement et au maintien des informations de l'utilisateur en lien avec le service proposé tout en garantissant une sécurité dans l'étendu de leur divulgation.

Le système de l'invention comprend également une unité de mise à jour d'au moins une des bases de données du système, positionnée au niveau du centre de gestion ou bien déportée sur un terminal ou sur un équipement de terminaison réseau d'un fournisseur d'accès réseau. La mise à jour s'opère par l'intervention du système de gestion et en récupérant une ou plusieurs informations lors de chaque connexion, identification ou authentification d'un utilisateur au niveau du portail d'un serveur par l'utilisation d'au moins un identifiant de premier niveau ou de niveau supérieur. La récupération et la mémorisation de données sont assurées par une unité spécifique qui permet notamment la récupération d'au moins un identifiant d'au moins une des informations du contexte réseau emprunté lors d'une authentification ou d'une identification effectuée par l'intermédiaire du système de gestion. Les informations du contexte réseau qui concernent les couches de traitement ou de transport répertorient alors au moins les identifiants respectifs d'une couche d'application, d'une couche de présentation, d'une couche de session, d'une couche de transport, d'une couche réseau, d'une couche de liaison et d'une couche physique.

Le système de gestion a pour objectif d'être une interface privilégiée dans l'authentification d'un utilisateur au niveau du portail des différents serveurs, de sorte que cette authentification s'opère dans le cadre d'une relation de confiance entre le portail et le système de gestion. Ainsi, selon un mode de réalisation préféré, le système de gestion selon l'invention intègre une unité d'analyse et de vérification de l'indice de confiance d'au moins un serveur pour le compte duquel le centre de gestion effectue au moins une authentification. Cette vérification peut également concerner un indice de confiance relatif à une ou plusieurs données transmises directement par l'utilisateur. Un exemple de gestion d'indice de confiance est décrit avec de plus amples détails plus bas.

Le système selon l'invention peut également intégrer une unité de corrélation permettant d'agglomérer des informations communes à au moins deux identifiants, identifiant de premier niveau ou identifiant de niveau supérieur. Cette unité de corrélation permet à la fois l'agrégation et l'indexation de données reconnues ou considérées comme pertinentes par l'opérateur ou par l'utilisateur, la pertinence pouvant être prédéfinie, par exemple, par l'affectation d'une valeur de pertinence pour chacune des données susceptible d'être prise en compte. Par exemple, cette corrélation peut notamment s'opérer grâce au recoupement d'au moins une information contextuelle identique parmi plusieurs identifiants.

Le procédé de fonctionnement du système selon l'invention présente un mode opératoire principal qui débute lorsqu'un utilisateur, titulaire d'un identifiant dans une base de données du système, effectue une connexion (S4) au niveau d'un portail d'un serveur ou d'un réseau et qu'une identification ou qu'une authentification est nécessaire. Le portail émet alors une requête d'identification (S5) au système de gestion de l'invention de sorte que les données indispensables à l'authentification et/ou à l'identification de l'utilisateur et disponibles au niveau d'une base de données du système soient transmises au portail du serveur. Les données sont alors recherchées (S6) au niveau d'une base de données avec une première recherche au niveau des identifiants de premier niveau, puis une seconde recherche au niveau des identifiants de niveau supérieur pour sélectionner l'identifiant adéquat. Lorsque l'identifiant requis est sélectionné (S8) dans la base de données, la requête est analysée (S7) afin que les informations nécessaires à l'identification et/ou à l'authentification de l'utilisateur soient transmises (S9) au portail du serveur. Il convient également de remarquer que l'analyse (S7) de la requête peut être opérée concomitamment avec les recherches (S6) successives de données aux différents niveaux d'une base de données. Cette analyse (S7) concomitante des recherches (S6) permet d'optimiser les mécanismes et les algorithmes de recherche et d'analyse liés à un identifiant ou à un contexte. En effet, la sélection de l'identifiant approprié ne se fait pas de façon restrictive mais au contraire avec un élargissement des critères de recherche et de comparaison, notamment lorsqu'une même information est présente dans les informations contextuelles de différents identifiants. De même, l'analyse de la requête permet de déterminer à partir des informations contextuelles, le mécanisme d'authentification, la technologie de transport, le type de service, le type de contrat, les préférences du client, certaines contraintes techniques, etc. Les informations requises, si elles sont disponibles, sont alors transférées au portail de l'utilisateur pour que l'authentification de l'utilisateur puissent s'effectuer.

Selon un mode de réalisation préféré, lorsque le système comprend plusieurs bases de données d'identifiants, la recherche s'effectue prioritairement au niveau de la base de données déportée la plus proche de l'utilisateur. Par exemple, lorsqu'une partie de la base de données du système est déportée ou enregistrée au niveau d'un élément de mémoire du terminal de l'utilisateur, la recherche de l'identifiant s'effectue prioritairement au niveau de la base de données de ce terminal. Lorsque la recherche dans cette base de données n'aboutit pas, elle se poursuit au niveau d'une autre base de données, par exemple au niveau d'une base de données centralisée du système.

Concomitamment, au transfert de données au portail du serveur, les bases de données impliquées opèrent une mise à jour (S10) notamment en enregistrant la date de la nouvelle demande d'authentification, mais également en intégrant éventuellement de nouvelles données fournies par le portail du serveur et associées à la requête.

Un préalable à la réalisation de ce procédé impose un enregistrement (S2) de l'identifiant dans une base de données du système, associé (S3) à au moins une information contextuelle et/ou une information susceptible d'être accessible par le portail du serveur.

Selon un premier mode de fonctionnement, l'enregistrement (S2) de l'utilisateur est effectué au niveau d'un équipement centralisé du système de gestion de l'invention, l'utilisateur fournissant l'ensemble des informations (S1) qui permettront son authentification, à savoir par exemple, au moins l'URL (*Uniform Resource Locator*) du portail du serveur ou du réseau, des identifiant et authentifiant préférentiels et un niveau de confidentialité. Les données de l'utilisateur, une fois enregistrées, sont alors transmises au serveur qui procède à l'enregistrement au niveau de son portail, puis retourne l'authentifiant et l'identifiant de l'utilisateur au système de gestion qui les analyse pour éventuellement mettre à jour une base de données, au niveau informatif ou contextuel, pour au moins un identifiant. L'enregistrement de l'inscription est alors notifié à l'utilisateur pour un message de retour.

Selon un second mode de procédure, cet enregistrement (S2) est effectué par l'utilisateur directement au niveau du portail du serveur, en revanche, l'utilisateur délègue la gestion de l'identifiant au système de l'invention. Une fois que le serveur crée un profil d'utilisation et d'authentification pour accéder à son service, l'utilisateur est notifié de la création d'un compte. L'utilisateur se connecte alors au système de gestion de l'invention pour y intégrer les données nécessaires à son authentification. Ces informations peuvent être, par exemple, l'URL du portail du serveur ou du réseau, les identifiant et authentifiant, un niveau de confidentialité préférentiel, des moyens techniques d'accession, etc. Le système de gestion de l'invention analyse les informations d'authentification pour les intégrer dans une des bases de données du système à une position adaptée dans l'arborescence et la ramification fractale des identifiants, voire éventuellement mettre à jour une base de données, au niveau informatif ou contextuel, pour au moins un identifiant. Puis le système de gestion de l'invention notifie l'utilisateur de son inscription.

Selon une alternative de ce second mode de procédure, une fois que l'authentification est effectuée avec succès sur le serveur, celui-ci se connecte à une interface dédiée du système de gestion de l'invention pour lui communiquer les données de son inscription nécessaires à son authentification. Ces informations peuvent être, par exemple, l'URL du portail du serveur ou du réseau, les identifiant et authentifiant de l'utilisateur, un niveau de confidentialité préférentiel, des moyens techniques d'accessibilité, etc. Le système de gestion de l'invention analyse les informations d'authentification pour les intégrer dans une des bases de données du système à une position adaptée dans l'arborescence des identifiants, voire éventuellement mettre à jour une base de données, au niveau informatif ou contextuel, pour au moins un identifiant. Puis le système de gestion de l'invention notifie l'utilisateur et le serveur du succès de l'inscription.

Lorsque aucun enregistrement n'a pas été effectué préalablement au déclenchement du procédé ou bien lorsque les recherches d'identifiants n'aboutissent à aucun résultat positif, il est proposé à l'utilisateur d'effectuer son enregistrement selon un des différents modes opératoires proposés précédemment. L'enregistrement permet alors la création éventuellement d'un nouvel identifiant de premier niveau et/ou d'identifiants de niveaux supérieurs auprès d'une base de données.

L'enrichissement ou la mise à jour du système de gestion peut également être opéré par l'utilisateur lui-même qui souhaite apporter un ajout, une suppression ou encore une modification aux informations d'un identifiant dont il est titulaire. Cette modification peut s'effectuer par une intervention de l'utilisateur au niveau du portail du serveur qui communique les modifications, soit directement, soit via un retour à l'utilisateur, à un équipement centralisé du système de l'invention. Cette modification peut également s'opérer par l'utilisateur, via son terminal, directement au niveau d'un équipement centralisé du système, les modifications étant ensuite transmises au serveur.

Selon une particularité dans le mode de déroulement du procédé de l'invention, un échec dans les recherches d'un identifiant se poursuit par la génération automatisée d'un nouvel identifiant gérée par un équipement centralisé du système. L'échec de la recherche peut être dû à la suppression de l'identifiant suite à l'expiration d'un compte ou une fin de cycle de traitement, voire une incompatibilité avec des conditions générales de vente ou des critères de choix. Les critères de choix lors de la recherche ne permettent alors plus de retrouver l'identifiant. La génération du nouvel identifiant est alors opérée de sorte que l'identifiant soit conforme à un ou plusieurs critères restrictifs prédéfinis propres à l'opérateur et/ou à l'utilisateur et/ou au portail du serveur. Cette génération peut être opérée, par exemple, dans le cadre d'un changement périodique de mot de passe ou de nom d'utilisateur pour des raisons de sécurité.

La génération automatique d'un identifiant, c'est-à-dire sans qu'une autorisation explicite d'un utilisateur ne soit nécessaire, peut être opérée directement par le système de gestion de l'invention ou bien par le serveur, selon des modes opératoires respectivement similaires aux modes opératoires d'enregistrement précédemment décrit lorsque l'utilisateur effectivement lui-même la demande d'enregistrement au niveau du système de gestion de l'invention ou du serveur.

Le système de gestion d'identifiant de l'invention a pour objectif de garantir un niveau de sécurité adapté au type d'information associée à chaque identifiant. Ce système est ainsi arrangé pour établir une relation de confiance avec le portail du serveur ou du réseau auquel l'utilisateur souhaite se connecter. Le système de gestion de l'invention permet ainsi de vérifier et de confirmer auprès d'un serveur d'un niveau de confiance des données provenant directement d'un utilisateur. Par ailleurs, le niveau de confiance requis peut être enregistré dans un champ d'informations contextuelles. Selon un mode de réalisation préféré, cette procédure de vérification de l'indice de confiance est déclenchée à chaque fois que le serveur réceptionne des données provenant du terminal de l'utilisateur. Selon un mode de réalisation particulier, cette procédure comprend l'émission d'une requête par le portail du serveur ou du réseau à destination d'un équipement centralisé du système demandant une évaluation de l'indice de confiance associé à au moins une donnée réceptionnée. L'équipement du système opère une analyse de la requête pour déterminer l'identifiant de l'utilisateur associé aux données transmises et retrouver l'indice de confiance corrélé à l'utilisateur qui a transmis ces données au serveur ou réseau. L'indice de confiance est alors transmis au serveur ou réseau qui a émis la requête. Selon une particularité de réalisation, la vérification d'un indice de confiance déclenche une étape de mise à jour d'au moins une base de données, par exemple au niveau d'un champ contextuel associé à un identifiant de l'utilisateur.

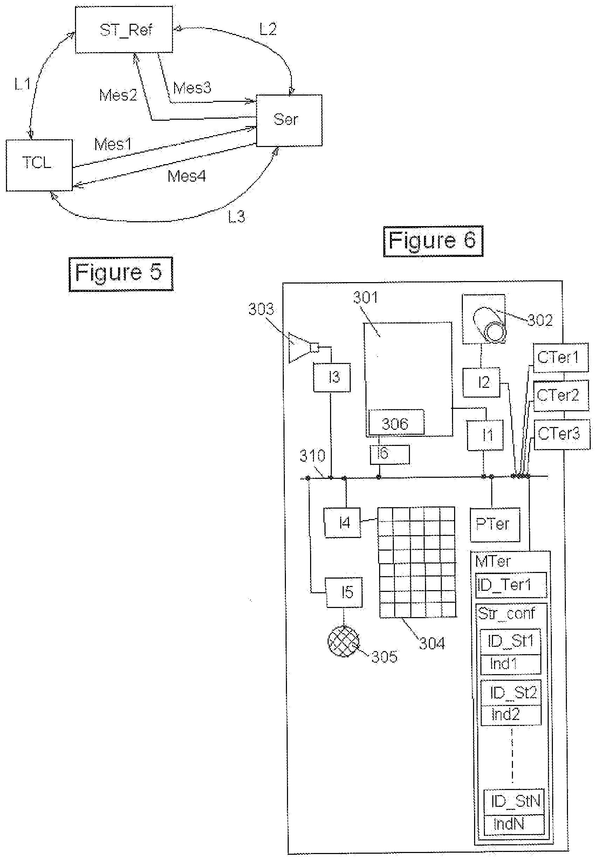

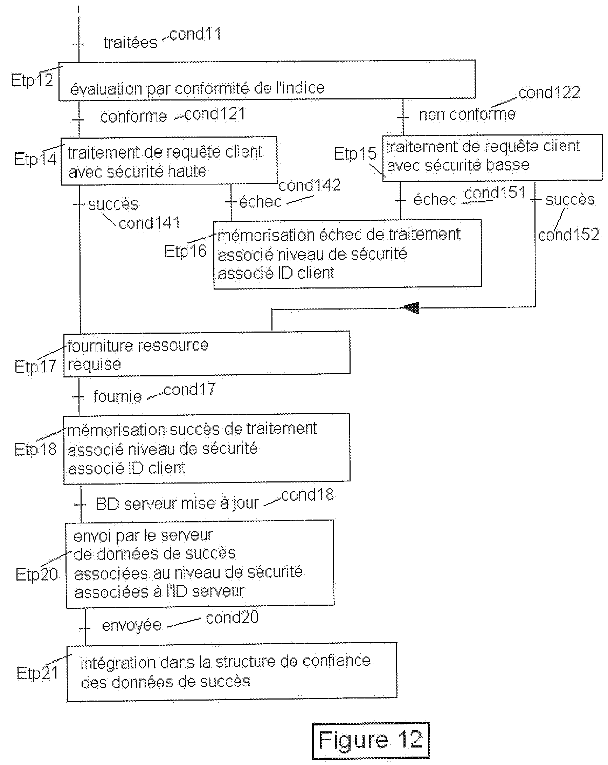

Un exemple non limitatif de système et de dispositif de vérification d'un indice de confiance est expliqué de façon détaillée dans ce qui suit. Ces explications se rapportent aux figures 5 à 13 du présent document.

Un réseau de télécommunication cellulaire est, par exemple, du type GSM (Global System for Mobile Communications), GPRS (Global Packet Radio Service), UMTS (Universal Mobile Télécommunications System) ou HSDPA (High Speed Downlink Packet Access). Le réseau comprend par exemple des passerelles (GGSN1) d'accès à des serveurs (SER1, SER2, SER3) du réseau Internet (WEB1). Ces serveurs sont par exemple accédés par des terminaux (Ter01, Ter02, Ter03) mobiles du réseau cellulaire de communication par ondes radiofréquences.

Un terminal (Ter01, Ter02, Ter03) mobile, pouvant être un terminal client utilisant le protocole de communication de confiance, est, par exemple, relié au réseau de communication par ondes radiofréquences, en établissant une liaison (LR01, LR02, LR03) radio de communication avec une station (BT1, BT2) de transmission. Les stations de transmission sont, par exemple, des stations de type BTS (Base Transceiver Station) pour le réseau GSM/GPRS ou des stations de type Node B pour le réseau UMTS/HSDPA.

Ces stations de transmission sont gérées, par exemple, par des contrôleurs (CTR1, CTR2) qui commandent, généralement chacun plusieurs stations de transmission. Le contrôleur est relié par des lignes (LB1, LB2) de communication électriques ou optiques, avec les stations de transmission contrôlées par ce contrôleur. Un contrôleur est, par exemple, un contrôleur du type BSC (Base Station Controller) pour le réseau GSM, ou un contrôleur du type RNC (Radio Network Controller) pour le réseau UMTS.

Un routeur (COM1), est par exemple relié par des liaisons (LCOM1, LCOM2, LCOM3) avec les contrôleurs et avec un dispositif d'interface avec la passerelle. Les contrôleurs sont par exemple reliés d'autre part avec le dispositif (SGSN1) d'interface avec une passerelle (GGSN1) d'accès à Internet. La passerelle est, par exemple, associée à un dispositif routeur pour l'acheminement des communications. Le dispositif d'interface est par exemple du type SGSN (Serving GPRS Support Node), associé à une passerelle du type GGSN (Gateway GPRS Support Node). La passerelle, par exemple du type GGSN, est ainsi utilisée comme interface entre un réseau cellulaire (ROP1, ROP2) d'un opérateur et le réseau Internet public ou d'autres réseaux à haut débit. Le dispositif d'interface, la passerelle et le routeur communiquent, par exemple, avec une base (HLR1) de données de gestion des communications, du type HLR (Home Location Register), comprenant pour chaque abonné, l'identité internationale de l'abonné sous la forme de son code IMSI, son numéro d'abonné et la ou les offres de services souscrites auprès de son opérateur de télécommunication. Un dispositif de traitement et de gestion des communications est par exemple associé à la base de données de gestion des communications.

Les noeuds de communication, comme par exemple, les stations de transmission, les contrôleurs ou les routeurs, reliés entre eux par des lignes de communication, permettent de transmettre plusieurs types de données, selon un ou plusieurs types de protocoles de transmission de données. Un réseau peut aussi comprendre des noeuds du type routeur, commutateurs ou coupe-feu. Les données transportées sont par exemple des données représentatives de la voix, de messages de texte, de messages multimédia audio ou vidéo, de données de gestion ou d'autres types de données.

Un terminal mobile est généralement authentifié de façon sûre pour se connecter à un réseau de communication par ondes radiofréquences. De plus l'utilisateur de ce terminal entre un code personnel d'identification, également appelé code PIN, permettant de débloquer l'objet à puce comprenant les données d'abonnement et d'authentification. D'autre part, les évolutions technologiques permettent à un terminal, d'établir des connexions directes avec d'autres appareils ou d'établir des connexions via plusieurs types de réseaux simultanément. Ainsi un terminal mobile tel qu'un ordinateur portable, un téléphone portable ou un assistant personnel de type PDA, peut réaliser un pont entre un serveur dédié aux accès par un réseau cellulaire et un appareil connecté au terminal mobile. De manière non limitative, un terminal (Ter01) mobile comprend, par exemple, une liaison de communication avec un réseau local (LAN1) auquel est relié un terminal (Ter21) communiquant par une liaison WIFI. Un terminal (Ter02) mobile peut aussi être connecté directement à une machine par une liaison filaire, par exemple de type USB (Universal Serial Bus), ou par une liaison radiofréquence, par exemple de type Bluetooth®. Le terminal mobile en liaison avec un réseau cellulaire radiofréquence peut aussi être relié à d'autres types de réseaux. Les terminaux clients utilisant le protocole de confiance, peuvent appartenir à tous types de réseaux, tels que les réseaux désignés par exemple par NGN (New Génération Network), ou des réseaux communautaires, comme par exemple du type MESH ou ADHOC, où les terminaux communicants sur le réseau sont eux-mêmes des noeuds de communication du réseau.

Un réseau cellulaire radiofréquence est, par exemple, interconnecté, par des passerelles, avec plusieurs autres réseaux comme d'autres réseaux cellulaires ou des réseaux de type RNIS (Réseau Numérique à Intégration de Services) pour la téléphonie fixe ou le réseau Internet. Certains opérateurs désignés, par exemple par MVNO (Mobile Virtual Network Operator) proposent par exemple un accès à un réseau sans posséder d'infrastructure de support des communications, comme par exemple les fréquences propres de communication. La sous-traitance massive et les agrégations de contenu sont notamment un facteur d'accroissement du risque de corruption des bases de données et de fraudes relatives aux identifiants.

Les multiples interactions possibles d'un terminal avec plusieurs types d'appareils ou de réseaux, sont représentatives de la convergence des technologies. La convergence des technologies implique qu'un service, comme par exemple pour le téléchargement de fichiers de sonnerie pour téléphone, soit accessible par un réseau de communication cellulaire par ondes radiofréquences ou par le réseau Internet ou par un réseau local. Un exemple de terminal mobile de communication par ondes radiofréquences sera notamment décrit par la suite, en référence à la figure 6. Les capacités croissantes des réseaux, par exemple pour les terminaux mobiles, permettent de plus des applications de plus en plus complexes. Le réseau UMTS permet, par exemple, le développement de services de visiophonie qui permettent par exemple un dialogue en visioconférence entre deux personnes. Des applications vidéo, basées sur le réseau UMTS et s'appuyant sur un protocole vidéo mobile, comme par exemple le protocole H324M, permettent par exemple de naviguer rapidement et immédiatement à travers toute une variété de services vidéo tels que la télévision en direct, les caméras en direct, également appelées webcams, ou le pré-enregistrement et le téléchargement vidéo en mode continu dit « streaming ». Les services vidéo peuvent aussi être combinés à des applications interactives exécutées dans le terminal mobile, pour fournir des accès à des serveurs Internet et permettre de parcourir le réseau Internet. Les terminaux clients reliés au réseau Internet peuvent notamment avoir accès à des serveurs destinataires répartis partout dans le monde. Ainsi un terminal peut accéder à un service en envoyant tout type de requête, sous la forme par exemple d'un SMS (Short Message Service) ou d'un MMS (Multimedia messaging Service) ou d'une requête IP. Le terminal peut aussi initialiser une communication par le protocole SIP (Session Initiation Protocol), puis envoyer une requête vers un serveur en utilisant le protocole RTP (Real-time Transport Protocol) ou le protocole HTTP (HyperText Transfer Protocol) ou le protocole FTP (File Transfer Protocol). Les équipements de gestion des sessions comprennent, par exemple le protocole Radius (Remote Authentication Dial-In User Service) ou le protocole DHCP (Dynamic Host Configuration Protocol), le système DNS (Domain Name System) associé à la procédure ENUM qui permet d'utiliser un numéro de téléphone comme clé de recherche dans le DNS ou encore le protocole LDAP (Lightweight Directory Access Protocol).

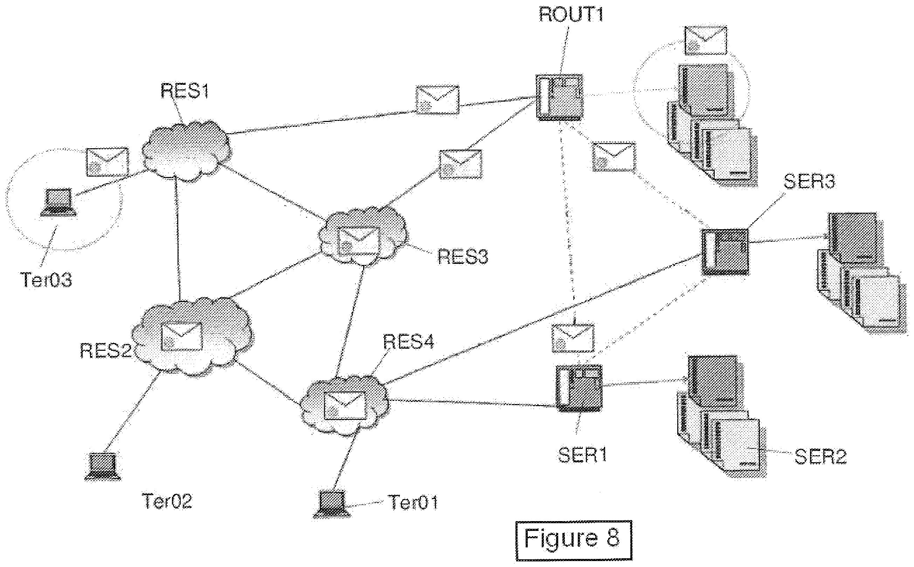

De plus lorsqu'un terminal client envoie une requête à destination d'un terminal serveur, la requête peut emprunter plusieurs chemins différents pour arriver jusqu'au serveur. Différents modes de transmission des messages sont en effet susceptibles d'être appliqués pour le routage des messages. Un premier serveur (SER1) de sécurité en communication avec un terminal (Ter02, Ter03) client, réalise par exemple un premier filtrage de sécurité, avant d'adresser les requêtes du client, vers un second serveur (Ser21, Ser2) fournissant le service au terminal client. Mais le premier serveur de sécurité peut recevoir des requêtes provenant d'une multitude de réseaux (LAN1, ROP2, ROP1) possibles ou transmises par une multitude de serveurs (SER3) ou de relais ou de routeurs (ROUT1) ou de passerelles possibles ou d'autres types de noeud de communication. Comme représenté à la figure 8, la requête peut passer par plusieurs réseaux (RES1, RES2, RES3, RES4).

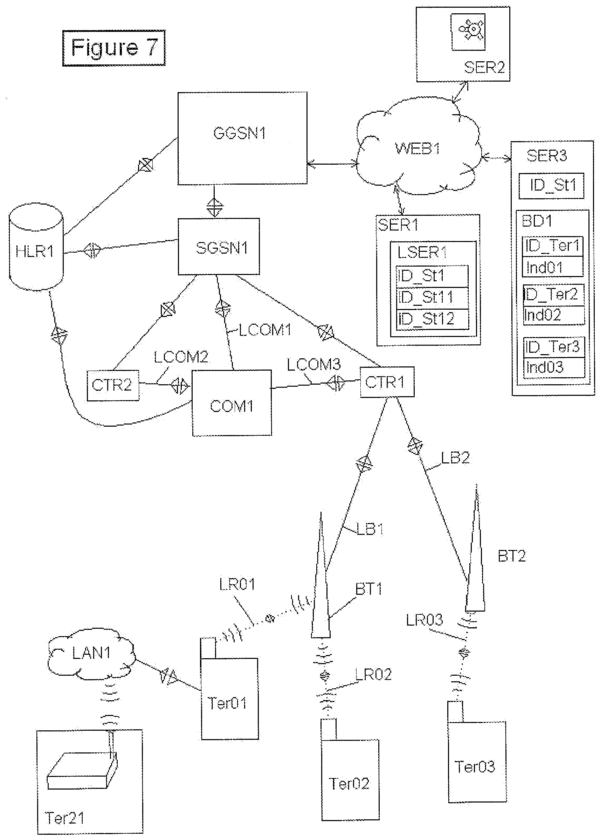

Comme schématisé à la figure 7, un terminal client (TCL), tel qu'un terminal mobile relié au réseau de communication par ondes radiofréquences ou un terminal relié au réseau Internet ou un autre terminal de communication relié à un ou plusieurs réseaux de télécommunication, communique, par exemple, avec un serveur (Ser) destinataire ou avec une station (ST_Ref) de confiance de référence, par des liaisons (L1, L3) de communication permettant l'envoi et la réception de messages (Mes1, Mes4). La station (ST_Ref) de confiance de référence communique d'autre part avec le serveur (Ser) destinataire, par une liaison (L2) de communication, pour l'envoi ou la réception de messages (Mes2, Mes3). De manière non limitative, la station de confiance de référence peut être un agent communicant du réseau, de type serveur Internet ou un noeud du réseau, comme par exemple un dispositif routeur ou un relais ou une passerelle. Ainsi la station de confiance peut être, de manière non limitative :
- un point de collecte d'informations sur le trafic dans son réseau ou,
- un point d'accès au trafic pour le terminal client ou,
- un point d'accès au service demandé par requête du terminal client.

Le serveur destinataire, à la réception d'une requête (Mes1) par le terminal client (TCL) peut, par exemple, faire référence à la station (ST_Ref) de confiance de référence, par l'envoi d'une requête (Mes2) avec réception d'une réponse (Mes3) à cette requête, avant d'envoyer une réponse (Mes4) à la requête du terminal client (TCL). Dans le cas où la station (ST_Ref) de référence est un noeud intermédiaire entre le terminal (TCL) client et le serveur (Ser) destinataire, un indice de confiance peut être incorporé, de manière non limitative, directement dans la requête, par la station de confiance de référence, de façon à être extraite par le serveur (Ser) destinataire. La présente invention facilite notamment la transmission des données en apportant un outil de sécurisation des échanges permettant l'utilisation de plusieurs chemins de routage ou l'agrégation de données, par son approche coopérative et non hiérarchique, proposant par exemple une traçabilité des messages, tels que des requêtes ou des réponses à des requêtes, en fonction d'un ou plusieurs indices de confiance.

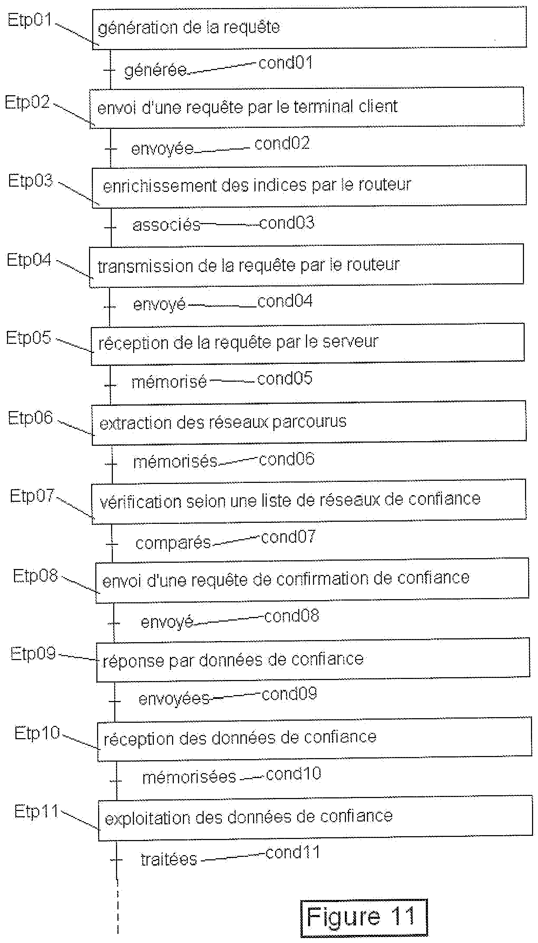

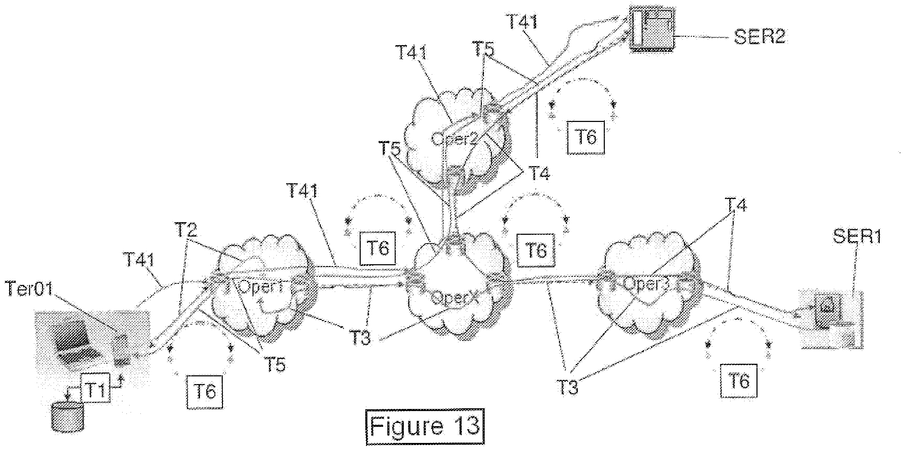

Un exemple de procédé de communication va maintenant être décrit, en référence aux figures 11 et 13. De manière non limitative, l'utilisateur démarre une communication à plusieurs niveaux de sécurité, en activant une structure (Str_conf) de confiance, mémorisée en mémoire (MTer) du terminal mobile. De manière non limitative, la structure (Str_conf) de confiance peut être mémorisée dans une mémoire non volatile du terminal ou dans un module amovible d'identification de l'utilisateur, également désigné par carte SIM (Subscriber Identity Module). L'utilisateur est ainsi libre de choisir d'utiliser ou non sa structure (Str_conf) de confiance. De cette façon, un utilisateur ne souhaitant pas collecter et archiver des informations de confiance relatives à ses activités sur différents serveurs fréquentés, peut désactiver sa structure de confiance ou la réinitialiser.

De manière non limitative, comme représenté à la figure 6, l'identifiant de confiance (ID_Ter1) ou la structure (Str_conf) de confiance peut être initialisé par un serveur (SER_Conf) fournissant, par exemple, des identifiants de confiance (ID_Ter1, ID_St1) pour des terminaux (Ter01, Ter03) clients ou pour des serveurs (SER1, SER3) participant à cette méthode de capitalisation de la confiance réciproque. Une structure (Str_conf) de confiance peut aussi être initialisée par un serveur lors d'une première connexion avec le procédé de confiance activé, le serveur (SER1, SER3) fournissant alors au terminal son identifiant de confiance. De manière non limitative, un serveur central de gestion de confiance dépositaire d'indices de confiance comprend une base de données mémorisant des structures de confiance associées chacune à un identifiant propre à un terminal client déterminé. Une structure de confiance comprend, par exemple, un ou plusieurs indices de confiance chacun associé à :
- un identifiant d'une station de confiance comme producteur de l'indice,
- une valeur décimale représentative d'une confiance accordée par le producteur, au détenteur de l'indice de confiance, le détenteur correspondant à l'identifiant du terminal auquel la structure est associée,
- une valeur temporelle représentative d'une date de création de l'indice, correspondant par exemple à une date d'évaluation ou d'affectation de l'indice,
- une durée de vie de l'indice avant expiration de sa validité.

De manière non limitative, la structure mémorisée dans le terminal client peut être associée à un identifiant du serveur central de gestion de confiance, comme dépositaire d'un ou plusieurs indices de confiance. L'identifiant du dépositaire pourra, par exemple, être fourni par le terminal client, au serveur destinataire. Ainsi le serveur central de gestion de confiance pourra être interrogé, par exemple par une requête envoyée par un serveur destinataire, lors d'une opération de vérification ou par un terminal client lors d'une mise à jour de sa structure de confiance.

Une étape (Etp01) de génération d'une requête destinée à un serveur (Ser) destinataire est, par exemple, exécutée par le terminal (TCL) client. La requête générée par un composant de traitement du terminal, comprend, de manière non limitative :
- un identifiant (ID_Ter1) de confiance du terminal, par exemple spécifique à la structure de confiance et distinct des identifiants tels que le code IMSI (International Mobile Subscriber Identity) ou le code IMEI (International Mobile Equipment Identity),
- un mot de passe ou une clé d'authentification,
- un ordre correspondant aux services ou aux données demandées par la requête du terminal,
- un ou plusieurs indices de confiance (Ind1, Ind2, IndN) chacun associé à une référence (ID_St1, ID_St2, ID_StN) vers une station de confiance,
- un ou plusieurs attributs associés à chaque indice de confiance parmi : un attribut représentatif d'une date de mise à jour de l'indice de confiance, un attribut représentatif d'une durée de vie avant expiration de la validité de l'indice de confiance, un attribut représentatif d'une valeur décimale de l'indice de confiance.

Après la génération (cond01) de la requête, l'envoi de la requête est, par exemple réalisé, par le terminal client, lors d'une étape (Etp02) suivante.

Après l'envoi (cond02) de la requête vers le serveur destinataire, un ou plusieurs routeurs réalisent, par exemple un enrichissement par des indices de confiance supplémentaires, lors d'une étape (Etp03) suivante. Chaque routeur ou noeud de communication recevant et traitant la requête de façon à l'acheminer jusqu'au serveur destinataire, ajoute par exemple un indice de confiance dont la valeur est représentative du parcours emprunté par la requête, jusqu'au routeur. Cet indice de confiance est notamment associé à une référence de ce routeur. Le routeur ou le noeud de communication peut aussi réaliser une pondération des indices de confiance.

Après (cond03) l'association à la requête d'un parcourt et d'une référence du routeur ou après une pondération des indices de confiance, le routeur réalise, par exemple, une transmission de la requête vers le serveur destinataire, selon un chemin déterminé, lors d'une étape (Etp04) suivante. De manière non limitative, la requête est transmise vers un terminal serveur d'un même réseau ou vers un terminal serveur d'un réseau différent en passant par une ou plusieurs passerelles ou en passant par un ou plusieurs routeurs.

Après (cond04) la transmission de la requête par le routeur, la requête est, par exemple reçue par le serveur destinataire, lors d'une étape (Etp05) suivante. La requête gérée par une interface logicielle et matérielle de communication, est par exemple mémorisée dans un espace temporaire de travail.

Après (cond05) la mémorisation de la requête provenant du terminal client, le serveur destinataire exécute par exemple une étape (Etp06) de lecture de la requête et d'extraction du ou des indices représentatifs du parcours de la requête. Le parcours est par exemple traité pour déterminer l'ensemble des différents réseaux par lesquels est passée la requête.

Après (cond06) la mémorisation de données représentatives des différents réseaux parcourus, une étape (Etp07) suivante de vérification par une liste de réseaux de confiance est, par exemple exécutée par le serveur destinataire. Cette liste de réseaux de confiance conformes à un critère de confiance, est, par exemple mémorisée par le serveur destinataire et comprend, par exemple, un ensemble de réseaux pour lesquels la connexion d'un terminal nécessite une authentification du terminal. Un réseau cellulaire de communication par ondes radiofréquences est, exemple compris dans cette liste de réseaux de confiance, la connexion d'un terminal mobile nécessitant une authentification selon une sécurité renforcée et les communications sur le réseau cellulaire étant de plus cryptées. Un réseau local interne d'une entreprise, par exemple de type Ethernet, pourra aussi appartenir à la liste des réseaux de confiance. Au contraire un réseau non protégé dont l'accès est laissé libre au public, accédé par exemple par des liaisons de type Wi-Fi, sera exclu de la liste de confiance. Les réseaux parcourus sont par exemple comparés chacun avec les réseaux de confiance de la liste afin d'évaluer un ou plusieurs indices de confiance de la requête, selon un critère de confiance déterminé. Si tous les réseaux appartiennent à la liste des réseaux de confiance, le critère de confiance sur la requête est, par exemple, considéré comme respecté. Si un ou plusieurs réseaux n'appartiennent pas à la liste des réseaux de confiance, la requête est, par exemple, évaluée non conforme au critère de confiance. Le terminal pourra aussi comprendre une liste complémentaire de réseaux non conformes au critère de confiance. De manière non limitative, le procédé de communication comprend une ou plusieurs évaluations d'indices de confiance selon un ou plusieurs critères de confiance.

De manière non limitative, après la comparaison (cond07) pour l'évaluation selon le critère de confiance relatif à la liste de réseaux de confiance, une autre étape (Etp08) de vérification selon un autre critère de confiance, est par exemple exécutée. Cette étape (Etp08) comprend, par exemple, l'envoi d'une requête de confirmation de confiance, par le serveur (SER1) destinataire, à une station de confiance référencée associée à un indice de confiance transmis dans la requête du terminal client. De manière non limitative, le serveur destinataire peut se référer à une station de confiance productrice d'un l'indice de confiance ou au serveur central de gestion de confiance si l'identifiant du serveur central a été fourni par le terminal client, au serveur destinataire. Le serveur central de gestion de confiance permet par exemple de fournir une réponse à une requête de confirmation de l'exactitude d'indices de confiance fournis. Le serveur central de gestion peut aussi fournir des identifiants de confiance relatifs au terminal client associés chacun à un identifiant de station de confiance de référence.

De manière non limitative, l'identifiant (ID_St1) de confiance de la station (SER3) de confiance, fournie par le terminal client ou par le serveur central de gestion de confiance, est connu par le serveur (SER1) destinataire qui comprend, par exemple, une liste (LSER1) d'identifiants de stations (ID_St1, ID_St11, ID_St12) de confiance. La requête comprend, par exemple, plusieurs indices (Ind1, Ind2 ou respectivement IndN) de confiance associés chacun à une référence (ID_St1, ID_St2 ou respectivement ID_StN) vers une station. Le serveur destinataire exécute, par exemple, une sélection des indices de confiance en fonction des stations de confiance de référence, connues dans sa liste, pour envoyer une ou plusieurs requêtes de confirmation de confiance à ces stations de confiance ayant produit les indices de confiance. De manière non limitative, la requête de confirmation de confiance comprend au moins :
- l'identifiant (ID_Ter1) de confiance du terminal client, ou
- l'indice (Ind1) de confiance associé à la station de confiance référencée par son identifiant (ID_St1).

Après l'envoi (cond08) de la requête de confirmation de confiance, à la station de confiance, par le serveur destinataire, la requête est, par exemple traitée par la station de confiance de référence, dans une étape (Etp09) suivante pour produire une réponse à la requête comprenant des données de confiance. Après (cond09) que la réponse ait été envoyée, le serveur destinataire réalise, par exemple, la réception de la réponse à sa requête lors d'une étape (Etp10) suivante. Après la mémorisation (cond10) de cette réponse, une étape (Etp11) suivante de traitement des données de confiance est, par exemple, réalisée par le serveur destinataire pour déterminer si l'indice de confiance fourni par le terminal client, est conforme à un critère de confiance en relation avec la station de confiance de référence.

Des exemples de données de confiance et de leur traitement vont maintenant être décrits. La station de référence est par exemple un serveur similaire au serveur destinataire. Un site de vente en ligne pourra, par exemple, se mettre en relation avec un autre site de vente en ligne équivalent ou partenaire pour s'assurer que l'utilisateur du terminal client est doté d'un ensemble de qualités requises pour ce site. Le serveur destinataire et la station de confiance de référence peuvent ainsi établir une relation d'échange d'informations relatives à un même terminal client. La station de confiance de référence recevant la requête de confirmation de confiance, extrait par exemple, l'identifiant (ID_Ter1) du terminal client ou l'indice (Ind1) relatif à la station de confiance, fourni par le terminal client. Après extraction de l'identifiant (ID_Ter1) ou de l'indice (Ind1), la station (SER3) de confiance recherche, par exemple, dans sa base de données des informations correspondantes. La station (SER3) de confiance extrayant et retrouvant dans sa base de données, l'identifiant (ID_Ter1) du terminal, répond par exemple à la requête de confirmation de confiance, en fournissant l'indice (Ind01) de confiance associé dans sa base de données. De même la station de confiance peut associer à un indice, un identifiant de terminal associé dans sa base de données. Le serveur (SER1) destinataire, à la réception de la réponse, peut comparer l'indice ou l'identifiant fournis par la station de confiance, avec ceux fournis par le terminal. Si la comparaison correspond, l'indice de confiance est alors conforme au critère de confiance. Dans le cas contraire l'indice n'est pas conforme.

Une clé et une signature peuvent aussi être associées à un indice de confiance ou à un identifiant de terminal client, dans la base (BD1) de données de la station de référence. La clé et la signature sont par exemple transmises lors de la réponse à la requête de confirmation de confiance. Le serveur (SER1) destinataire, recevant la réponse peut alors traiter l'indice de confiance fourni par le terminal client pour en extraire une signature selon la clé fournie afin de vérifier si la signature extraite de la requête du terminal client, correspond à la signature fournie par la station de confiance.

Après (cond11) le traitement des données de confirmation de confiance, une étape (Etp12) suivante d'évaluation de l'ensemble des indices est, par exemple, exécutée par le serveur (SER1) destinataire, si plusieurs indices de confiance ont été évalués chacun selon un critère de confiance associé. De manière non limitative, la mise en relation des indices évalués comprend par exemple un moyennage des indices ou une sélection de l'indice le plus favorable ou le moins favorable par rapport à son critère de confiance associé. Des indices, donnant une valeur de confiance graduelle sur une échelle de confiance, sont par exemple avantageusement moyennés ou corrélés par un ensemble de pondérations, pour donner un indice de confiance global. Un ensemble d'indices représentatifs des réseaux parcourus est par exemple assimilé à l'indice le moins favorable.

Après l'évaluation d'un indice global, ou après l'évaluation d'un indice unique, conforme à son critère de confiance (cond122), le serveur (SER1) destinataire exécute, par exemple, une étape (Etp15) suivante de traitement de la requête envoyée par le terminal client, avec un niveau bas de sécurité.

Après l'évaluation d'un indice global, ou après l'évaluation d'un indice unique, non conforme à son critère de confiance (cond121), le serveur destinataire (SER1) exécute, par exemple, une étape (Etp14) suivante de traitement de la requête envoyée par le terminal client, avec un niveau haut de sécurité.

Le traitement de sécurité n'est pas limité à deux niveaux de sécurité et un indice de confiance peut être évalué graduellement selon plusieurs niveaux, pour faire correspondre un niveau de sécurité graduel. De cette façon le serveur (SER1) destinataire peut se prémunir contre des requêtes estimées risquées par une procédure lourde de vérification ou d'authentification. D'autre part, le serveur destinataire peut réaliser un traitement de sécurité plus rapide voire absent pour des requêtes estimées plus sûres. Par exemple dans le cas où une requête a déjà été traitée par un procédé de sécurité, par le noeud (SER21) de communication immédiatement précédent, le serveur (SER2) destinataire ne réalise pas de procédure de sécurité. Le serveur de sécurité peut notamment vérifier rapidement auprès du noeud précédent que la procédure de sécurité a bien été exécutée. De plus le serveur destinataire peut recevoir, en parallèle, des requêtes provenant d'autres noeuds de communication considérés comme moins sûrs, une procédure de sécurité supplémentaire étant alors réalisée. De manière non limitative, une telle procédure de sécurité supplémentaire sera, par exemple, exécutée lorsque le serveur destinataire est inactif, de façon à ne pas ralentir le transfert de données avec le noeud de communication considéré comme sûr.

De manière non limitative, le traitement de la requête comprend des échanges de messages pour réaliser une authentification du terminal client ou une authentification mutuelle entre le terminal client et le serveur destinataire, par une clé d'authentification. De manière non limitative, le traitement de la requête peut aussi comprendre une identification par identifiant de connexion et mot de passe. Le procédé de communication par gestion de la confiance basée sur les indices de confiance, pourra avantageusement être associé à des procédés existants comme l'identification ou l'authentification ou à des solutions dites « anti-phishing », permettant de certifier au terminal client, l'identité du serveur destinataire.

En cas d'échec (cond142, cond151) du traitement de la requête, une étape (Etp16) suivante de mémorisation de l'échec est par exemple exécutée. Cette mémorisation comprend une mémorisation, par le serveur destinataire, dans sa base de données, de l'identifiant (ID_Ter1) de confiance du terminal client associé au niveau de sécurité du traitement et associé à des données représentatives du traitement exécuté. La ressource demandée par la requête du terminal client est notamment non fournie au terminal client. Ainsi un terminal client frauduleux ou erroné est désigné dans une base de donnée d'archivage et de collecte d'informations de confiance du serveur destinataire. Ce terminal pourra ainsi être signalé à d'autres serveurs, lorsque le serveur (SER1) destinataire est appelé comme station de confiance de référence, lors de communications suivantes. Le serveur destinataire peut aussi envoyer, au serveur central de gestion de confiance, des données représentatives de l'identifiant (ID_Ter1) de confiance du terminal client associé à un indice de confiance, produit par le serveur destinataire et correspondant au niveau de sécurité du traitement ayant échoué.

En cas (cond141, cond152) de succès du traitement de la requête, la ressource requêtée par le terminal (TCL) client est fournie par le serveur destinataire, au terminal client, lors d'une étape (Etp17) suivante.

Après la fourniture (cond17) de la ressource, une étape (Etp18) suivante de mémorisation du succès du traitement est, par exemple exécutée par le serveur (SER1) destinataire. Le serveur (SER1) destinataire mémorise, par exemple dans sa base de données, un identifiant de confiance (ID_Ter1) du terminal client associé à des données représentatives d'un indice de confiance représentatif du traitement exécuté selon le niveau de sécurité déterminé. Ainsi de façon avantageuse un terminal client ayant déjà effectué des opérations de traitement de requête ou de vérification, avec succès, pourra être recommandé par ce serveur (SER1) destinataire. L'utilisateur a alors intérêt à activer sa structure (Str_conf) de confiance pour que les futurs serveurs visités réalisent des procédures de sécurité en tenant compte des traitements favorables à l'utilisateur, déjà réalisés.

Après (cond18) la mise à jour de la base de données d'archives de confiance du serveur (SER1) destinataire, une étape (Etp20) suivante d'envoi, au terminal client ou au serveur central de gestion de confiance, de données de succès de traitement, est par exemple exécutée par le serveur (SER1) destinataire. Ces données de succès de traitement comprennent par exemple un identifiant de confiance du serveur (SER1) destinataire, associé à des données représentatives d'un indice de confiance représentatif du traitement réalisé selon le niveau de sécurité et éventuellement un identifiant du terminal client envoyé au serveur central de gestion de confiance. Ainsi le serveur central de gestion de confiance peut enrichir sa base de données.

De manière non limitative, les données produites par le serveur destinataire, comprennent aussi un ou plusieurs attributs associés à chaque indice de confiance parmi : un attribut représentatif d'une date de mise à jour de l'indice de confiance, un attribut représentatif d'une durée de vie avant expiration de la validité de l'indice de confiance, un attribut représentatif d'une valeur décimale de l'indice de confiance.

Après l'envoi (cond20) des données de succès du traitement, par le serveur (SER1) destinataire, ces données sont par exemple réceptionnées et intégrées, par le terminal client, lors d'une étape (Etp21) suivante. La structure (Str_conf) de confiance du terminal client est, par exemple enrichie par ces nouvelles données. Le terminal client extrait et mémorise, par exemple, dans sa structure de confiance, des données représentatives de l'identifiant du serveur associées à l'indice de confiance fourni par le serveur. Les indices de confiance sont, par exemple, mémorisés en association avec leurs attributs. Ainsi un utilisateur a alors intérêt à activer sa structure de confiance qui permettra de fournir des références représentatives de traitements favorables, aux futurs serveurs destinataires. Les futurs traitements de sécurité pourront, par exemple, être accélérés pour le terminal client, relativement à la sensibilité des transactions ou des données demandées par la requête envoyée par le terminal client, vers un serveur destinataire.

Les désignations de terminal client et de serveur ne sont pas limitatives et un terminal mobile peut aussi recevoir des requêtes d'une station fixe ou mobile. Les rôles de client et de serveur peuvent notamment être intervertis. Une station de référence peut par exemple être un autre terminal, comme par exemple un terminal mobile, les terminaux mobiles communiquant entre eux, par exemple, afin de déterminer si un indice de confiance d'une station fixe est conforme ou non à un critère de confiance.

De façon avantageuse un utilisateur d'un terminal client ne réalisant pas de manoeuvres frauduleuses ou erronées pourra accumuler des données représentatives des succès de traitements en relation avec différents serveurs. Des serveurs pourront aussi se regrouper pour bénéficier d'une expérience commune pour des utilisateurs ayant souscrit à leur système de vérification de confiance, afin de détecter des terminaux clients respectant leurs critères de confiance et traiter plus rapidement et plus sûrement leurs requêtes.

La figure 6 représente un exemple non limitatif de terminal client réalisé par un terminal mobile de télécommunication, comme par exemple un téléphone cellulaire. Le terminal mobile comprend, par exemple, une unité (Pter) de calcul en communication via un bus (310) de données, avec une mémoire (MTer) et avec plusieurs interfaces (I1, I2, I3, I4, I5, I6) de communication. Différents éléments constituent de manière non limitative, une interface de communication avec l'utilisateur : le terminal mobile comprend par exemple un microphone (305) d'enregistrement de la voix de l'utilisateur, un haut (303) parleur, un écran (301) d'affichage, un clavier (304), une dalle tactile (306) ou une caméra (302). Chacun des éléments constituant l'interface utilisateur est, de manière non limitative, en communication avec le bus de données, via son interface de communication. Chacun des composants ou modules du terminal mobile, à l'exception de l'unité de calcul, est contrôlé par un dispositif de contrôle non représenté ou par l'unité (PTer) de calcul. L'unité de calcul, par exemple un circuit intégré de type ASIC ou un microcontrôleur ou un processeur, traite des données sous forme numérique. Le terminal mobile comprend aussi une interface de communication avec un module d'identification, désigné par carte SIM, comprenant un organe de traitement, un organe d'interface et un organe de mémorisation. La carte SIM peut ainsi prendre en charge une partie des traitements ou des données stockées.

Le terminal mobile comprend, de manière non limitative, plusieurs interfaces (CTer1, CTer2, CTer3) de communication avec l'extérieur, reliées au bus (310) de données pour recevoir ou fournir des données représentatives de données échangées avec l'extérieur du terminal. Une interface de communication avec l'extérieur du terminal est, par exemple, du type communication par ondes radiofréquences avec un réseau cellulaire. Une autre interface de communication avec l'extérieur du terminal est, par exemple, du type communication par ondes radiofréquences à courte portée comme Bluetooth® ou Wi-Fi. Une autre interface de communication avec l'extérieur du terminal est, par exemple, du type filaire comme USB ou Firewire ou d'autres types de liaisons série ou parallèle.

Les interfaces de communication avec l'extérieur comprennent par exemple chacune un module de modulation et un module de démodulation. Le signal en entrée du module de modulation ou en sortie du module de démodulation, comprend par exemple différentes données dépendantes, de manière non limitative, du protocole de communication et de l'information transmise.

L'activation ou la désactivation de la structure (Str_conf) de confiance est, par exemple réalisée par l'utilisateur utilisant un menu interactif de réglage de l'état de la structure de confiance. De manière non limitative, l'activation de la structure de confiance provoque une incorporation automatique par le module (PTer) de traitement, d'une partie ou de l'ensemble des données de la structure (Str_conf) de confiance, dans une requête destinée à un serveur destinataire. L'activation de la structure (Str_conf) de confiance peut aussi provoquer de façon automatique l'ajout d'une couche supplémentaire correspondant à un protocole de communication, ce protocole supplémentaire étant disposé au-dessus de la couche protocolaire d'application, en se référant, par exemple aux protocoles de communication OSI. Rappelons que la couche applicative est par exemple disposée au-dessus de la couche de présentation qui est par exemple disposée au-dessus de la couche de session. La couche de session est par exemple disposée au-dessus de la souche de transport qui est disposée au-dessus de la couche de réseau. La couche de réseau est, par exemple disposée au-dessus de la couche de liaison qui est disposée au-dessus de la couche physique.

Le protocole de confiance est, par exemple mis en oeuvre grâce à l'utilisation de champs optionnels non utilisés des protocoles existants. Le protocole de confiance est, par exemple, encapsulé dans le protocole IP, par l'utilisation des champs optionnels. Un protocole existant, comme par exemple le protocole IP, peut aussi être utilisé pour transmettre les informations de confiance associées à des données cryptées correspondant à la requête ou aux paquets à transmettre. Ainsi le protocole de confiance peut être rapidement et facilement mis en oeuvre.

De manière non limitative, une nouvelle structure de communication peut aussi être associée au protocole de confiance correspondant à un nouveau protocole de communication mis en oeuvre et remplaçant, par exemple, le protocole IP. Une nouvelle structure permettrait ainsi une plus grande souplesse dans l'élaboration des nouvelles fonctionnalités relatives, par exemple, à la notion de confiance.

La figure 13 représente plusieurs transactions entre un terminal (Ter01) client et des serveurs (SER1, SER2), les messages échangés passant par plusieurs structures de transport (Oper1, OperX, Oper3, Oper2).

Un utilisateur prépare, par exemple, sa connexion en activant (T1) une couche protocolaire d'indice de confiance, au-dessus de la couche applicative. De manière non limitative, le terminal envoie aussi une requête de connexion au réseau. Son indice de confiance est notamment inséré dans un profil destiné à certifier l'intégrité des requêtes envoyées ou à permettre une traçabilité.

Le terminal de l'opérateur se connecte (T2) par exemple ensuite avec le réseau de son opérateur (Oper1). Une requête de connexion de l'utilisateur est par exemple, envoyée vers le service de connexion de son opérateur (Oper1). La connexion comprend, par exemple une phase d'identification et d'authentification du terminal dans le réseau. De manière non limitative, le terminal échange, par exemple des indices avec son point de connexion au réseau. Les indices de confiance fournis, sont, par exemple évalués et pondérés. La connexion est, par exemple établie en fonction des pondérations des indices de confiance. Ainsi la phase de connexion peut être conditionnée par l'indice de confiance. Cette connexion conditionnelle permet notamment un contrôle de l'intégrité de la requête ou une traçabilité de l'action.

De manière non limitative, une connexion (T3) de l'utilisateur au service, par exemple pour du commerce en ligne, via plusieurs opérateurs (Oper1, Oper2) est, par exemple ensuite réalisée. Une requête de connexion de l'utilisateur, vers le service, est par exemple envoyée via des opérateurs (Oper1, Oper2) intermédiaires. De manière non limitative, la connexion comprend une phase d'identification et d'authentification, à travers le réseau, entre le client et le serveur (SER3). Une phase d'échange des indices de confiance est par exemple aussi réalisée de façon à contrôler l'intégrité des requêtes et permettre une traçabilité de l'action. L'échange des indices est par exemple suivi d'une phase d'évaluation et de pondération des indices de confiance entre le client et le serveur. Ainsi le client peut choisir, en fonction de la pondération, de réaliser ou non des actes en relation avec ce serveur et si oui effectuer, par exemple auparavant, des procédures de sécurité. Le client autorise ou non, par exemple, la communication d'informations concernant sa carte bancaire ou d'informations relatives à sa vie privée. De même la plateforme de service accepte ou non la transaction, en fonction des indices de confiance, et si oui, la plateforme exécute, par exemple des procédures de renforcement de l'authentification, avant l'acceptation d'un payement en ligne. Une définition des seuils d'achats est par exemple réalisée pour accéder aux services de façon sécurisée, avec des options limitées. Des achats sont, par exemple ensuite réalisés.

Une connexion (T4) est, par exemple, ensuite réalisée entre la plateforme de service (SER1), vers la banque (SER2) de l'utilisateur, via des opérateurs intermédiaires (Oper2, Oper3). Une requête de connexion est par exemple envoyée, par la plateforme (SER1) de service, à la banque de l'utilisateur. Cette connexion comprend, par exemple, une phase d'identification et d'authentification à travers le réseau, entre le la plateforme (SER1) de service et la banque (SER2). De manière non limitative, des indices de confiance sont par exemple échangés permettant de contrôler l'intégrité des requêtes et permettre une traçabilité de l'action. Une phase d'évaluation et de pondération des indices de confiance est par exemple exécutée pour permettre, par exemple, un choix de la part de la banque, pour réaliser ou non la transaction et si oui selon quelles modalités. En fonction, par exemple, d'une évaluation du niveau de sécurité, la banque communique ou non des informations concernant le client, comme par exemple son crédit. De même la phase d'évaluation et de pondération permet le choix de la part de la plateforme (SER1) de service d'accepter ou non la transaction et si oui selon quelles modalités. En fonction du niveau de sécurité, la plateforme de service, accepte ou non un paiement avec la banque (SER2), par exemple en fonction de seuils d'achats déterminés ou d'options d'accès à des services, comme par exemple des services d'assurance. La transaction bancaire est, par exemple, réalisée.

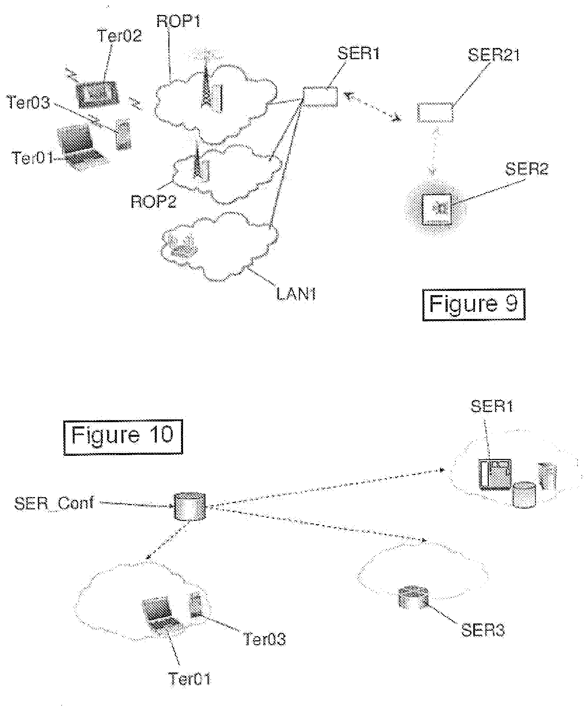

En parallèle de la connexion (T3) de l'utilisateur (Ter01) au service (SER1), et la connexion (T4) entre la plateforme (SER1) de service et vers la banque (SER2) de l'utilisateur, l'utilisateur réalise par exemple une connexion (T41) à la banque (SER2) du service de commerce en ligne, via des opérateurs intermédiaires. Une requête de connexion est, par exemple envoyée par l'utilisateur (Ter01), vers la banque du service. De manière non limitative, le schéma de la figure 9 représente un accès aux banques de l'utilisateur et du service commercial en ligne, par un même serveur (SER2). De manière non limitative, la connexion comprend une phase d'identification et d'authentification, à travers le réseau, entre le client et la banque. De manière non limitative, une phase d'échange des indices de confiance est par exemple réalisée, permettant un contrôle d'intégrité et une traçabilité de l'action. L'échange des indices de confiance est, par exemple, suivi d'une phase d'évaluation et de pondération des indices de confiance entre le client et la banque du service commercial en ligne. Ainsi le choix de la part du client est possible pour la réalisation ou non des actes ou des transactions et si oui selon quelles modalités. Par exemple en fonction du niveau de sécurité ou de garantie, la communication d'informations concernant sa carte bancaire ou sa vie privée, sera ou non réalisée. Les achats sont, par exemple réalisés.

Une notification (T5) de la banque est par exemple envoyée à travers le réseau, au client pour la confirmation de la transaction. La notification est, par exemple réalisée par des messages de type courrier électronique ou SMS afin de confirmer la transaction. Le terminal client réalise par exemple une évaluation et une pondération des indices de confiance afin de choisir d'accepter cette transaction ou de contester la transaction.

De plus tout au long de la chaîne de transaction une capitalisation (T6) des indices de confiance de l'ensemble de la chaîne de transaction est réalisée. Chaque acteur de la transaction pondère ou majore des indices de confiance. De manière non limitative, dans une communauté de confiance, une base de données commune peut, par exemple servir, pour le stockage des indices de confiance.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de gestion et d'agrégation de plusieurs identifiants appartenant à des niveaux différents, les identifiants étant reliés entre eux suivant un arrangement de type fractal, dans lequel chacun de ces niveaux, et les identifiants qui leurs sont associés, sont enregistrés autour d'une racine d'identification, dite "identifiant racine", commune à ces identifiants et spécifique d'un profil d'un utilisateur titulaire de l'identifiant, le système comprenant :
- un centre de gestion (1) comprenant au moins une première interface de communication avec au moins un utilisateur et une seconde interface de communication avec au moins un serveur ou au moins un réseau d'un serveur, le centre de gestion étant positionné pour former un intermédiaire entre un utilisateur et ledit serveur auprès duquel l'utilisateur doit s'identifier,
- une base de données gérée par le centre de gestion (1) et stockant ledit arrangement fractal d'identifiants, comprenant, pour chacun des identifiants d'un niveau donné, d'une part, au moins un champ d'information contextuelle, pour l'enregistrement d'au moins un identifiant de niveau supérieur dans ledit arrangement fractal et, d'autre part, au moins une information susceptible d'être accessible audit serveur,
- un dispositif de gestion de l'authentification d'un utilisateur auprès dudit serveur par au moins un desdits identifiants, ce dispositif comprenant au moins un moyen d'analyse de ladite information contextuelle reliant les informations nécessaires à l'authentification dudit utilisateur auprès dudit serveur,
- un dispositif de sélection d'au moins un identifiant pour permettre, auprès d'une interface de connexion dudit serveur, une authentification dudit utilisateur, et
- une unité d'analyse et de vérification d'un indice de confiance, enregistré dans ledit arrangement fractal, pour vérifier si cet indice de confiance correspond à un niveau de sécurité permettant audit centre de gestion (1) d'autoriser et/ou de cloisonner l'accès à au moins une partie des données dudit arrangement fractal .

2. Système de gestion et d'agrégation de plusieurs identifiants selon la revendication 1, comprenant additionnellement une unité de corrélation d'au moins deux identifiants communs, dans ledit arrangement fractal, à partir d'au moins une information contextuelle identique.

3. Système de gestion et d'agrégation de plusieurs identifiants selon l'une des revendications 1 et 2, comprenant additionnellement une unité de mise à jour d'au moins une base de données du système à chaque connexion et authentification réalisée en faisant intervenir le système de gestion, et une unité de récupération et de mémorisation d'au moins un identifiant représentant au moins une couche de traitement du réseau emprunté lors d'une authentification opérée par l'intermédiaire du système de gestion et mettant en jeu au moins un identifiant dudit utilisateur.

4. Système de gestion et d'agrégation de plusieurs identifiants selon l'une des revendications précédentes, dans lequel, au sein dudit arrangement fractal de la base de données, ledit identifiant de niveau supérieur est corrélé d'une part à au moins une information contextuelle et d'autre part à au moins une information susceptible d'être accessible au serveur.

5. Système de gestion et d'agrégation de plusieurs identifiants selon l'une des revendications précédentes, dans lequel ladite information contextuelle est corrélée à au moins un identifiant de niveau n de la base de données et intègre au moins un élément d'une liste, cette liste comprenant notamment un identifiant de niveau supérieur associé à l'identifiant de niveau n, un authentifiant associé à l'identifiant de niveau supérieur, un identifiant d'au moins une couche de traitement ou de transport du réseau emprunté lors d'une authentification mettant en jeu au moins l'identifiant de niveau n, un nom d'application, un identifiant du type de service proposé par le serveur, une ou plusieurs données associées à l'identifiant de niveau supérieur, un niveau de sécurité requis lors de l'authentification pour autoriser et/ou cloisonner l'accès à au moins une donnée de l'identifiant de niveau supérieur, et/ou un critère propre à l'utilisateur.

6. Système de gestion et d'agrégation de plusieurs identifiants selon une des revendications précédentes, dans lequel le centre de gestion est contrôlé par un opérateur fournisseur d'accès à au moins une interface de communication.

7. Système de gestion et d'agrégation de plusieurs identifiants selon une des revendications 1 à 6, dans lequel ladite base de données est positionnée au niveau d'un équipement du centre de gestion.

8. Système de gestion et d'agrégation de plusieurs identifiants selon une des revendications 1 à 7, dans lequel la base de données d'au moins un identifiant est déportée pour être positionnée au niveau d'un terminal dudit utilisateur et/ou d'une carte à circuits intégrés et/ou d'un équipement de terminaison d'un réseau d'un fournisseur d'accès.

9. Procédé de gestion et d'agrégation de plusieurs identifiants mettant en jeu au moins un système selon une des revendications précédentes, le procédé comprenant :
- une demande d'accès (S4) par ledit utilisateur titulaire d'au moins un identifiant, depuis son terminal, audit serveur,
- une émission (S5) d'une requête d'identification par ledit serveur au système de gestion,
- une recherche (S6) de l'identifiant de premier niveau dudit utilisateur lié à ladite requête,
- une recherche (S6) d'au moins un identifiant de niveau supérieur associé à l'identifiant de premier niveau et en lien avec la requête d'identification émise, dans lequel une analyse (S7) de la requête d'identification émise par ledit serveur, utilise les résultats desdites recherches (S6) pour que ledit système de gestion réalise :
- une sélection (S8) de l'identifiant de niveau supérieur associé à l'identifiant de premier niveau de l'utilisateur et correspondant à la requête du serveur,
- une transmission (S9) d'au moins une information d'identification et/ou d'authentification correspondant à l'identifiant sélectionné, adapté au serveur dans ce transfert, l'identifiant étant associé à au moins une information contextuelle de l'authentification sur le serveur.
et dans lequel, au moins une étape de réception d'un identifiant dudit utilisateur par ledit serveur et provenant du terminal dudit utilisateur génère une vérification d'un indice de confiance par ledit centre de gestion, cette vérification s'opérant en intégrant notamment :
- un envoi par le serveur d'une requête audit centre de gestion, cette requête demandant une évaluation de l'indice de confiance associé audit identifiant reçu,
- une analyse de l'indice de confiance associé audit identifiant reçu et lié à au moins un identifiant de niveau supérieur dudit utilisateur, pour la détermination d'au moins un identifiant de niveau supérieur de l'utilisateur et sa corrélation avec un indice de confiance correspondant;
- une réponse à la requête par transmission d'un indice de confiance au serveur, et/ou
- une mise à jour d'au moins une base de donnée associée audit identifiant dudit utilisateur, pour vérifier si cet indice de confiance correspond à un niveau de sécurité permettant audit centre de gestion (1) d'autoriser et/ou de cloisonner l'accès à au moins une partie des données dudit arrangement fractal.

10. Procédé de gestion et d'agrégation de plusieurs identifiants selon la revendication précédente, dans lequel , préalablement à la demande d'accès au serveur par le titulaire d'un identifiant, le procédé comprend un enregistrement d'au moins un identifiant dans la base de données et d'au moins un élément contextuel d'authentification associé à cet identifiant permettant de répondre à au moins une requête d'identification émise par au moins un serveur.

11. Procédé de gestion et d'agrégation de plusieurs identifiants selon une des revendications 9 à 10, comprenant additionnellement :
- une demande de mise à jour d'au moins un identifiant par un utilisateur titulaire d'un identifiant de premier niveau, depuis son terminal, à un élément du centre de gestion,
- une étape de transfert par le terminal, d'une requête de mise à jour à l'élément du système,
- une étape de recherche par l'élément du centre de gestion de l'identifiant de premier niveau de l'utilisateur, et/ou une étape de recherche de l'identifiant de niveau supérieur adéquat,
- une étape de sélection de l'identifiant correspondant à la requête, une étape de modification, d'ajout et/ou de suppression d'au moins une information d'identification et/ou d'authentification correspondant à l'identifiant de premier niveau et/ou à l'identifiant de niveau supérieur.

12. Procédé de gestion et d'agrégation de plusieurs identifiants selon la revendication 11, dans lequel, en cas d'échec de la recherche d'un identifiant adéquat, le procédé se poursuit par :
- une étape de génération automatisée d'un nouvel identifiant de niveau adéquat gérée par un équipement du centre de gestion,
et/ou
- une étape d'enregistrement de l'utilisateur sous la forme d'au moins un nouvel identifiant de premier niveau auprès d'une base de donnée.

13. Procédé de gestion et d'agrégation de plusieurs identifiants selon la revendication 10 ou 12, dans lequel les étapes d'enregistrement comprennent alors
- une étape d'enregistrement d'un utilisateur sur le portail du serveur,
- une étape de notification à l'utilisateur de la création d'un compte par le serveur,
- une étape de connexion de l'utilisateur par son terminal au système de gestion ou une étape de connexion du serveur au système de gestion pour permettre l'introduction et l'intégration des données nécessaires à son authentification à au moins une base de données,
- une étape d'analyse des données d'authentification de l'utilisateur pour les intégrer dans une des bases de données du système à une position adaptée dans l'arrangement fractal des identifiants,
- une étape de mise à jour d'une base de données, au niveau informatif ou contextuel, pour au moins un identifiant.

14. Procédé de gestion et d'agrégation de plusieurs identifiants selon la revendication 11 ou 13, dans lequel les étapes d'enregistrement comprennent alors :
- une étape d'enregistrement de l'utilisateur au niveau d'un équipement du centre de gestion, l'utilisateur fournissant par son terminal l'ensemble des informations qui permettront son authentification,
- une étape de transmission des données de l'utilisateur au serveur, une étape d'enregistrement des données par le serveur au niveau de son portail,
- une étape de retour de l'authentifiant et/ou de l'identifiant de l'utilisateur au système de gestion,
- une étape d'enregistrement ou de mise à jour d'une base de données, au niveau informatif ou contextuel, pour au moins un identifiant.

## Patentansprüche

1. System zum Verwalten und Sammeln mehrerer Kennungen, die zu unterschiedlichen Niveaus gehören, wobei die Kennungen gemäß einer fraktalen Anordnung miteinander verbunden sind, in der jedes dieser Niveaus, und die damit assoziierten Kennungen, um eine Identifikationswurzel "Wurzelkennung", registriert sind, die diesen Kennungen gemeinsam und für ein Profil eines Titularbenutzers der Kennung spezifisch sind, wobei das System Folgendes umfasst:
- ein Managementzentrum (1), das wenigstens eine erste Kommunikationsschnittstelle mit wenigstens einem Benutzer und eine zweite Kommunikationsschnittstelle mit wenigstens einem Server oder wenigstens einem Netzwerk eines Servers umfasst, wobei das Managementzentrum zum Bilden einer Vermittlung zwischen einem Benutzer und dem genannten Server positioniert ist, bei dem sich der Benutzer identifizieren muss,
- eine vom Managementzentrum (1) verwaltete Datenbank, die die genannte fraktale Anordnung von Kennungen speichert, die für jede der Kennungen ein gegebenes Niveau einerseits von wenigstens einem Kontextinformationsfeld zum Registrieren wenigstens einer Kennung eines höheren Niveaus in der genannten fraktalen Anordnung und andererseits wenigstens eine Information umfasst, auf die der genannte Server zugreifen kann,
- eine Vorrichtung zum Verwalten der Authentifikation eines Benutzers bei dem genannten Server mittels wenigstens einer der genannten Kennungen, wobei diese Vorrichtung wenigstens ein Mittel zum Analysieren der genannten Kontextinformation umfasst, die die für die Authentifikation des genannten Benutzers bei dem genannten Server notwendigen Informationen verbindet,
- eine Vorrichtung zum Auswählen wenigstens einer Kennung, um eine Authentifikation des genannten Benutzers bei einer Verbindungsschnittstelle des genannten Servers zuzulassen, und
- eine Einheit zum Analysieren und Verifizieren eines Konfidenzindexes, registriert in der genannten fraktalen Anordnung, zum Verifizieren, ob dieser Konfidenzindex einem Sicherheitsniveau entspricht, das es dem Managementzentrum (1) gestattet, den Zugriff auf wenigstens einen Teil der Daten der genannten fraktalen Anordnung zu autorisieren und/oder zu unterteilen.

2. System zum Verwalten und Sammeln mehrerer Kennungen nach Anspruch 1, das zusätzlich eine Einheit zum Korrelieren von wenigstens zwei gemeinsamen Kennungen, in der genannten fraktalen Anordnung, auf der Basis von wenigstens einer identischen Kontextinformation umfasst.

3. System zum Verwalten und Sammeln mehrerer Kennungen nach einem der Ansprüche 1 und 2, das zusätzlich eine Einheit zum Aktualisieren wenigstens einer Datenbank des Systems bei jeder Verbindung und Authentifikation unter Involvierung des Managementsystems und eine Einheit zum Wiederherstellen und Speichern wenigstens einer Kennung umfasst, die wenigstens eine Verarbeitungsschicht des Netzwerks repräsentiert, ausgeliehen bei einer mittels des Managementsystems durchgeführten Authentifikation und unter Involvierung der wenigstens einen Kennung des genannten Benutzers.

4. System zum Verwalten und Sammeln mehrerer Kennungen nach einem der vorherigen Ansprüche, bei dem im Innern der genannten fraktalen Anordnung der Datenbank die genannte Kennung von höherem Niveau einerseits mit wenigstens einer Kontextinformation und andererseits mit wenigstens einer Information korreliert ist, auf die der Server zugreifen kann.

5. System zum Verwalten und Sammeln mehrerer Kennungen nach einem der vorherigen Ansprüche, bei dem die genannte Kontextinformation mit wenigstens einer Kennung von Niveau n der Datenbank korreliert ist und wenigstens ein Element einer Liste enthält, wobei diese Liste insbesondere Folgendes umfasst: eine mit der Kennung von Niveau n assoziierte Kennung eines höheren Niveaus, einen mit der Kennung von höherem Niveau assoziierten Authentifizierer, eine Kennung von wenigstens einer Verarbeitungs- oder Transportschicht des Netzwerks, ausgeliehen bei einer Authentifikation unter Involvierung wenigstens der Kennung von Niveau n, einen Anwendungsnamen, eine Kennung des vom Server vorgeschlagenen Service-Typs, eine oder mehrere mit der Kennung von höherem Niveau assoziierte Daten, ein bei der Authentifikation zum Autorisieren und/oder Unterteilen des Zugangs in wenigstens ein Datenelement der Kennung von höherem Niveau benötigtes Sicherheitsniveau und/oder ein dem Benutzer eigenes Kriterium.

6. System zum Verwalten und Sammeln mehrerer Kennungen nach einem der vorherigen Ansprüche, bei dem das Managementzentrum durch einen Betreiber zum Geben von Zugang zu wenigstens einer Kommunikationsschnittstelle kontrolliert wird.

7. System zum Verwalten und Sammeln mehrerer Kennungen nach einem der Ansprüche 1 bis 6, bei dem die genannte Datenbank an einem Gerät des Verwaltungszentrums positioniert ist.

8. System zum Verwalten und Sammeln mehrerer Kennungen nach einem der Ansprüche 1 bis 7, bei dem die Datenbank von wenigstens einer Kennung ausgelagert und an einem Endgerät des genannten Benutzers und/oder einer Chipkarte und/oder einem Endgerät eines Netzwerks eines Zugangsgebers positioniert wird.

9. Verfahren zum Verwalten und Sammeln mehrerer Kennungen unter Involvierung wenigstens eines Systems nach einem der vorherigen Ansprüche, wobei das Verfahren Folgendes beinhaltet:
- eine Anfrage (S4) durch den genannten Titularbenutzer von wenigstens einer Kennung um Zugang von seinem Endgerät zu dem genannten Server,
- Aussenden (S5) einer Identifikationsanforderung durch den genannten Server an das Managementsystem,
- Suchen (S6) der Kennung des ersten Niveaus des genannten Benutzers in Verbindung mit der genannten Anforderung,
- Suchen (S6) wenigstens einer Kennung von höherem Niveau, assoziiert mit der Kennung des ersten Niveaus und in Verbindung mit der ausgesendeten Identifikationsanforderung, wobei eine Analyse (S7) der von dem genannten Server ausgesendeten Identifikationsanforderung die Ergebnisse der genannten Suchen (S6) nutzt, damit das genannte Managementsystem Folgendes durchführt:
- Auswählen (S8) der Kennung von höherem Niveau, assoziiert mit der Kennung des ersten Niveaus des Benutzers und entsprechend der Anforderung des Servers,
- Übertragen (S9) wenigstens einer Identifikations- und/oder Authentifikationsinformation entsprechend der gewählten Kennung, angepasst an den Server bei dieser Übertragung, wobei die Kennung mit wenigstens einer Kontextinformation der Authentifikation auf dem Server assoziiert ist,
wobei wenigstens ein Schritt des Empfangens einer vom Endgerät des genannten Benutzers kommenden Kennung des genannten Benutzers durch den genannten Server eine Verifikation eines Konfidenzindexes durch das genannte Managementzentrum erzeugt, wobei diese Verifikation erfolgt, indem sie insbesondere Folgendes enthält:
- Senden einer Anforderung an das genannte Managementzentrum durch den Server, wobei diese Anforderung eine Beurteilung des mit der genannten empfangenen Kennung assoziierten Konfidenzindexes erfragt,
- Analysieren des Konfidenzindexes, assoziiert mit der genannten empfangenen Kennung und verbunden mit wenigstens einer Kennung eines höheren Niveaus des genannten Benutzers, zum Bestimmen wenigstens einer Kennung von höherem Niveau des Benutzers und ihrer Korrelation mit einem entsprechenden Konfidenzindex,
- Antworten auf die Anforderung durch Übertragen eines Konfidenzindexes zu dem Server, und/oder
- Aktualisieren wenigstens einer mit der genannten Kennung des genannten Benutzers assoziierten Datenbank zum Verifizieren, ob dieser Konfidenzindex einem Sicherheitsniveau entspricht, das es dem Managementzentrum (1) gestattet, den Zugang zu wenigstens einem Teil der Daten der genannten fraktalen Anordnung zu autorisieren und/oder zu unterteilen.

10. Verfahren zum Verwalten und Sammeln mehrerer Kennungen nach einem vorherigen Anspruch, wobei das Verfahren vor dem Anfragen um Zugang zum Server durch den Inhaber einer Kennung eine Registrierung wenigstens einer Kennung in der Datenbank und wenigstens eines mit dieser Kennung assoziierten Authentifikationskontextelements beinhaltet, das es zulässt, auf wenigstens eine von wenigstens einem Server ausgesendete Identifikationsanforderung zu antworten.

11. Verfahren zum Verwalten und Sammeln mehrerer Kennungen nach einem der Ansprüche 9 bis 10, das zusätzlich Folgendes beinhaltet:
- eine Anfrage um Aktualisierung wenigstens einer Kennung durch einen Titularbenutzer einer Kennung des ersten Niveaus von seinem Endgerät an ein Element des Managementzentrums,
- einen Schritt des Übertragens, durch das Endgerät, einer Aktualisierungsanforderung zum Element des Systems,
- einen Schritt des Suchens, durch das Element des Managementzentrums, der Kennung des ersten Niveaus des Benutzers, und/oder einen Schritt des Suchens der Kennung des adäquaten höheren Niveaus,
- einen Schritt des Auswählens der Kennung entsprechend der Anforderung, einen Schritt des Modifizierens, Hinzufügens und/oder Unterdrückens wenigstens einer Identifikations- und/oder Authentifikationsinformation entsprechend der Kennung des ersten Niveaus und/oder der Kennung von höherem Niveau.

12. Verfahren zum Verwalten und Sammeln mehrerer Kennungen nach Anspruch 11, wobei das Verfahren im Falle des Misserfolgs der Suche einer adäquaten Kennung fortgesetzt wird durch:
- einen Schritt des automatischen Erzeugens einer neuen Kennung von adäquatem Niveau, verwaltet durch ein Gerät des Managementzentrums, und/oder
- einen Schritt des Registrierens des Benutzers in Form von wenigstens einer neuen Kennung des ersten Niveaus bei einer Datenbank.

13. Verfahren zum Verwalten und Sammeln mehrerer Kennungen nach Anspruch 10 oder 12, bei dem die Registrierungsschritte dann Folgendes beinhalten:
- einen Schritt des Registrierens eines Benutzers auf einem Portal des Servers,
- einen Schritt des Benachrichtigens des Benutzers über die Erzeugung einer Zahl durch den Server,
- einen Schritt des Verbindens des Benutzers durch sein Endgerät mit dem Managementsystem oder einen Schritt des Verbindens des Servers mit dem Managementsystem, um die Einführung und Integration der für seine Authentifikation bei wenigstens einer Datenbank notwendigen Daten zuzulassen,
- einen Schritt des Analysierens der Authentifikationsdaten des Benutzers für deren Integration in einer Datenbank des Systems an einer in der fraktalen Anordnung von Kennungen adaptierten Position,
- einen Schritt des Aktualisierens einer Datenbank, eines Informations- oder Kontextniveaus, für wenigstens eine Kennung.

14. Verfahren zum Verwalten und Sammeln mehrerer Kennungen nach Anspruch 11 oder 13, bei dem die Registrierungsschritte dann Folgendes beinhalten:
- einen Schritt des Registrierens des Benutzers bei einem Gerät des Managementzentrums, wobei der Benutzer durch sein Endgerät den Satz von Informationen liefert, die seine Authentifikation zulassen werden,
- einen Schritt des Übertragens von Daten des Benutzers zum Server, einen Schritt des Registrierens der Daten durch den Benutzer auf seinem Portal,
- einen Schritt des Zurückgebens des Authentifizierers und/oder der Kennung des Benutzers zu dem Managementsystem,
- einen Schritt des Registrierens oder Aktualisierens einer Datenbank auf Informations- oder Kontextniveau für wenigstens eine Kennung.

## Claims

1. System for the management and aggregation of a plurality of identifiers belonging to different levels, the identifiers being connected to each other in an arrangement of the fractal type, in which each of these levels, and the identifiers which are associated with them, are registered around an identification root called a "root identifier" which is common to these identifiers and specific to a profile of a user who owns the identifier, the system comprising:
- a management centre (1) comprising at least one first interface for communication with at least one user and a second interface for communication with at least one server or at least one server network, the management centre being positioned so as to form an intermediary between a user and said server to which the user must identify himself,
- a database managed by the management centre (1) and storing said fractal arrangement of identifiers, comprising, for each of the identifiers of a given level, on the one hand, at least one contextual information field, for the registration of at least one higher-level identifier in said fractal arrangement and, on the other hand, at least one piece of information capable of being accessible to said server,
- a device for the management of authentication of a user to said server by at least one of said identifiers, this device comprising at least one means of analysis of said contextual information connecting the pieces of information necessary for authentication of said user to said server,
- a device for the selection of at least one identifier in order to permit, at an interface for the connection of said server, authentication of said user, and
- a unit for analysis and verification of a confidence index, registered in said fractal arrangement, in order to verify whether this confidence index corresponds to a security level permitting said management centre (1) to authorise and/or close off access to at least some of the data of said fractal arrangement.

2. System for the management and aggregation of a plurality of identifiers according to claim 1, comprising in addition a unit for the correlation of at least two common identifiers, in said fractal arrangement, on the basis of at least one piece of identical contextual information.

3. System for the management and aggregation of a plurality of identifiers according to claims 1 and 2, comprising in addition a unit for updating at least one database of the system with each completed connection and authentication, involving the management system, and a unit for the recovery and storage of at least one identifier representing at least one layer of processing of the network used on the occasion of authentication carried out by means of the management system and involving at least one identifier of said user.

4. System for the management and aggregation of a plurality of identifiers according to one of the preceding claims, in which, within said fractal arrangement of the database, said higher-level identifier is correlated on the one hand with at least one piece of contextual information and on the other hand with at least one piece of information capable of being accessible to the server.

5. System for the management and aggregation of a plurality of identifiers according to one of the preceding claims, in which said piece of contextual information is correlated with at least one n-level identifier of the database and incorporates at least one element of a list, this list including in particular a higher-level identifier associated with the n-level identifier, an authenticator associated with the higher-level identifier, an identifier of at least one layer of processing or transport of the network used on the occasion of authentication involving at least the n-level identifier, an application name, an identifier of the type of service proposed by the server, one or more data associated with the higher-level identifier, a security level required on the occasion of authentication in order to authorise and/or close off access to at least one datum of the higher-level identifier, and/or a criterion peculiar to the user.

6. System for the management and aggregation of a plurality of identifiers according to one of the preceding claims, in which the management centre is controlled by an operator who provides access to at least one communications interface.

7. System for the management and aggregation of a plurality of identifiers according to one of claims 1 to 6, in which said database is positioned at the level of an item of equipment of the management centre.

8. System for the management and aggregation of a plurality of identifiers according to one of claims 1 to 7, in which the database of at least one identifier is moved in order to be positioned at the level of a terminal of said user and/or an integrated circuit board and/or an item of equipment terminating a network of an access provider.

9. Method for the management and aggregation of a plurality of identifiers involving at least one system according to one of the preceding claims, the method comprising:
- a request for access (S4) by said user who owns at least one identifier, from his terminal, to said server,
- transmission (S5) of an identification request by said server to the management system,
- a search (S6) for the first-level identifier of said user linked to said request,
- a search (S6) for at least one higher-level identifier associated with the first-level identifier in connection with the identification request transmitted, in which an analysis (S7) of the identification request transmitted by said server uses the results of said searches (S6) so that said management system carries out:
- selection (S8) of the higher-level identifier associated with the first-level identifier of the user and corresponding to the request of the server,
- transmission (S9) of at least one piece of identification and/or authentication information corresponding to the selected identifier, adapted to the server in this transfer, the identifier being associated with at least one piece of contextual information for authentication on the server,
and in which at least one step of reception of an identifier of said user by said server, coming from the terminal of said user, generates verification of a confidence index by said management centre, this verification being effected by incorporating in particular:
- sending by the server of a request to said management centre, this request asking for evaluation of the confidence index associated with said identifier received,
- an analysis of the confidence index associated with said identifier received and linked to at least one higher-level identifier of said user, for determination of at least one higher-level identifier of the user and its correlation with a corresponding confidence index;
- a response to the request by transmission of a confidence index to the server, and/or
- updating of at least one database associated with said identifier of said user, in order to verify whether this confidence index corresponds to a security level permitting said management centre (1) to authorise and/or close off access to at least some of the data of said fractal arrangement.

10. Method for the management and aggregation of a plurality of identifiers according to the preceding claim, in which, prior to the request for access to the server by the owner of an identifier, the method comprises registration of at least one identifier in the database and of at least one contextual authentication element associated with this identifier making it possible to respond to at least one identification request transmitted by at least one server.

11. Method for the management and aggregation of a plurality of identifiers according to one of claims 9 to 10, comprising in addition:
- a request for updating of at least one identifier by a user who owns a first-level identifier, from his terminal, to an element of the management centre,
- a step of transfer by the terminal of an update request to the element of the system,
- a step of searching by the element of the management centre for the first-level identifier of the user, and/or a step of searching for the appropriate higher-level identifier,
- a step of selection of the identifier corresponding to the request, a step of modification, addition and/or deletion of at least one piece of identification and/or authentication information corresponding to the first-level identifier and/or the higher-level identifier.

12. Method for the management and aggregation of a plurality of identifiers according to claim 11, in which, in case of failure of the search for an appropriate identifier, the method continues with:
- a step of automated generation of a new identifier of an appropriate level managed by an item of equipment of the management centre,
and/or
- a step of registration of the user in the form of at least one new first-level identifier in a database.

13. Method for the management and aggregation of a plurality of identifiers according to claim 10 or 12, in which the steps of registration then include
- a step of registration of a user on the portal of the server,
- a step of notification to the user of the creation of an account by the server,
- a step of connection of the user by his terminal to the management system or a step of connection of the server to the management system in order to permit the introduction and incorporation of the data necessary for his authentication to at least one database,
- a step of analysis of the authentication data of the user in order to incorporate them in a database of the system at an adapted position in the fractal arrangement of identifiers,
- a step of updating a database, at the informative or contextual level, for at least one identifier.

14. Method for the management and aggregation of a plurality of identifiers according to claim 11 or 13, in which the steps of registration then include:
- a step of registration of the user at the level of an item of equipment of the management centre, the user providing through his terminal all of the information which will permit his authentication,
- a step of transmission of the user data to the server, a step of registration of the data by the server at the level of its portal,
- a step of return of the user authenticator and/or identifier to the management system,
- a step of registration or updating of a database, at the informative or contextual level, for at least one identifier.
